# EUROPEAN PATENT APPLICATION

(11) **EP 4 768 846 A1**
(43) Date of publication of application: **01.07.2026**
(21) Application number: 24899157.2
(22) Date of filing: 31.05.2024
(51) Int. Cl.: G01B 11/00, G01B 11/02, G06T 7/00, G06T 7/13, G06T 7/62, G01N 21/88

(54) **ELECTRODE SHEET INSPECTION METHOD AND SYSTEM**

(30) Priority: 05.12.2023 CN 202311662292
(71) Applicant: Contemporary Amperex Technology Co., Limited, Ningde, Fujian 352100 (CN)
(72) Inventor: WU, Chunxu, Ningde, Fujian 352100 (CN); JIANG, Ping, Ningde, Fujian 352100 (CN); LU, Gaofeng, Ningde, Fujian 352100 (CN); LI, Hongyuan, Ningde, Fujian 352100 (CN)
(74) Representative: Kraus & Lederer PartGmbB
(86) International application number: PCT/CN2024/096830
(87) International publication number: WO 2025/118505

(57) **Abstract**

Disclosed in the present application are an electrode sheet inspection method and system. The method comprises: acquiring an image to be subjected to inspection, which is collected from an electrode sheet; on the basis of preset edge-capture region information, determining at least one edge-capture region from said image, wherein the preset edge-capture region information comprises position information and/or size information of the edge-capture region; performing boundary detection on each edge-capture region, so as to obtain a first boundary line in each edge-capture region, wherein the first boundary line is used for delineating different partitions of the electrode sheet that are arranged in a widthwise direction; and using the first boundary line in each edge-capture region to determine width information related to the electrode sheet. In this way, the present application can implement automatic inspection for an electrode sheet.

## Description

### CROSS-REFERENCE

The present application claims priority to Chinese Patent Application No. 2023116622920, filed with China National Intellectual Property Administration on December 5, 2023 and entitled "ELECTRODE PLATE INSPECTION METHOD AND SYSTEM", which is incorporated herein by reference in its entirety.

### TECHNICAL FIELD

The present application relates to the technical field of batteries, and in particular, to an electrode plate inspection method and system.

### BACKGROUND

An electrode plate of a lithium battery is composed of two parts: a substrate and a coating layer. The substrate is made of a copper foil or an aluminum foil, and the coating layer consists of an active substance. The electrode plate is prepared by coating the active substance on the substrate, followed by drying, compaction, and slitting. When the manufactured electrode plate is abnormal, such as metal exposure, bubbles, and pinholes in a coated region on the surface of the electrode plate, or non-compliant size of the coated region of the electrode plate, it will cause the prepared battery to exhibit poor capacity consistency, poor safety, high self-discharge, and the like, consequently seriously affecting the quality of the battery. Therefore, the inspection of the electrode plate is an urgent problem to be solved at present.

### SUMMARY

The present application at least provides an electrode plate inspection method and system.

A first aspect of the present application provides an electrode plate inspection method. The method includes: obtaining a to-be-inspected image acquired from an electrode plate; determining at least one edge capture region in the to-be-inspected image based on preset edge capture region information, where the preset edge capture region information includes position information and/or size information of the edge capture region; performing boundary detection on each edge capture region to obtain a first boundary line in each edge capture region, where the first boundary line is used for dividing different sub-regions of the electrode plate arranged in a width direction; and determining, by using the first boundary line in each edge capture region, width information related to the electrode plate.

In the above solution, the at least one edge capture region is determined in the to-be-inspected image based on the preset edge capture region information, the boundary detection is performed on each edge capture region to obtain the first boundary line in each edge capture region, and the width information related to the electrode plate is determined by using the first boundary line in each edge capture region. Therefore, automatic inspection of the electrode plate can be achieved.

Further, in the above solution, the width information related to the electrode plate can also be determined by using the preset edge capture region, so as to automatically detect the width information related to the electrode plate. In addition, the preset edge capture region does not need to be set by a user, thereby improving the efficiency of detecting the width information related to the electrode plate.

In some embodiments, determining the at least one edge capture region in the to-be-inspected image based on the preset edge capture region information includes: determining at least four edge capture regions in the to-be-inspected image based on the preset edge capture region information in a case that the electrode plate is an anode electrode plate, or determining at least six edge capture regions in the to-be-inspected image based on the preset edge capture region information in a case that the electrode plate is a cathode electrode plate. The boundary detection of all the edge capture regions is performed by multiple threads, and the boundary detection of each edge capture region is performed by using one of the threads.

In the above solution, the boundary detection of all the edge capture regions is performed by the multiple threads; that is, a plurality of first boundary lines in the to-be-inspected image are simultaneously captured, so as to accelerate the operation speed and shorten the processing time for a single to-be-inspected image.

In some embodiments, before determining the at least one edge capture region in the to-be-inspected image based on the preset edge capture region information, the electrode plate inspection method further includes: obtaining a sample image acquired from an electrode plate; capturing several second boundary lines in the sample image; and acquiring, by using each second boundary line, information of the edge capture region corresponding to each second boundary line so as to obtain the preset edge capture region information.

In the above solution, the preset edge capture region information can be automatically determined and generated, and the efficiency of determining and generating the preset edge capture region information is higher.

In some embodiments, capturing the several second boundary lines in the sample image includes: determining a boundary detection region of the sample image based on region setting information; and capturing the several second boundary lines from the boundary detection region; and/or, acquiring, by using each second boundary line, the information of the edge capture region corresponding to each second boundary line so as to obtain the preset edge capture region information includes at least one of the following steps: obtaining, for each second boundary line, position information of a first preset position point of the second boundary line as position information of a second preset position point in the edge capture region corresponding to the second boundary line; and acquiring size information of the edge capture region corresponding to the second boundary line.

In the above solution, the second boundary line in the boundary detection region can be flexibly determined based on the region setting information; and/or, the size information of the edge capture region can be flexibly adjusted.

In some embodiments, performing boundary detection on each edge capture region to obtain the first boundary line in each edge capture region includes: finding out, for each edge capture region, several boundary points by using a grayscale variation condition in the edge capture region, where a grayscale variation between the boundary point and an adjacent pixel point meets a boundary grayscale variation requirement; and performing straight line fitting by using the several boundary points in the edge capture region to obtain the first boundary line in the edge capture region.

In the above solution, when the grayscale variation between a pixel point and an adjacent pixel point adjacent thereto meets the boundary grayscale variation requirement, it indicates that a grayscale difference between the pixel point and the adjacent pixel point adjacent thereto is significant, a sub-region in which the pixel point is located is different from a sub-region in which the adjacent pixel point is located, and the pixel point is determined as the boundary point of two sub-regions in the edge capture region.

In some embodiments, determining, by using the first boundary line in each edge capture region, the width information related to the electrode plate includes: determining a sub-region to be divided by each first boundary line; and obtaining a distance between two first boundary lines corresponding to each target sub-region as width information of each target sub-region, where the target sub-region is any sub-region on the electrode plate, or is formed by stitching a plurality of continuously adjacent sub-regions.

In the above solution, the target sub-region is formed between the two boundary lines corresponding to the target sub-region. Therefore, the distance between the two first boundary lines corresponding to the target sub-region is the width of the target sub-region.

In some embodiments, determining the sub-region to be divided by each first boundary line includes: determining, based on grayscale information of two sides of each first boundary line, the sub-region to be divided by each first boundary line; extracting boundary line partitioning information of each edge capture region from the preset edge capture region information, where the boundary line partitioning information includes a sub-region identifier, a sub-region name, or sub-region sorting information of the sub-region to be divided by the first boundary line in the edge capture region, and the sub-region sorting information indicates sorting of the sub-region to be divided by the first boundary line in a plurality of sub-regions in the width direction of the electrode plate; and determining, by using the boundary line partitioning information of each edge capture region, the sub-region to be divided by the first boundary line in each edge capture region.

In the above solution, since sub-regions of the same type are present in the electrode plate, based on the grayscale information of the two sides of the first boundary line, the sub-region to be divided by the first boundary line can be determined, but it cannot be determined whether sub-regions of the same type to be divided by other first boundary lines are the same as the sub-region to be divided by the first boundary line itself. Through the boundary line partitioning information, the related information of the sub-region to be divided by the first boundary line in each edge capture region can be determined, so that two boundary lines corresponding to each sub-region can be determined.

In some embodiments, the width information includes coating-related width information capable of characterizing positions and/or widths of coated regions of two coating surfaces of the electrode plate; after determining, by using the first boundary line in each edge capture region, the width information related to the electrode plate, the electrode plate inspection method further includes: determining coating misalignment information by using the coating-related width information, where the coating misalignment information characterizes a misalignment condition of the coated region; and performing, based on the coating misalignment information, deviation correction on at least one of coating mechanisms of the two coating surfaces and the electrode plate by using a deviation correcting mechanism, so that the coated regions of the two coating surfaces after the deviation correction are aligned and/or both located at standard coating positions on the coating surfaces.

In the above solution, the deviation correction is performed in a timely manner based on the misalignment condition of the coated regions on the coating surfaces of the electrode plate, so as to enable the coated regions of the two coating surfaces of the electrode plate to be aligned and both located at the standard coating positions on the coating surfaces, ensuring the quality of the electrode plate, thereby ensuring the capacity consistency, safety, and reliability of cells subsequently manufactured based on the electrode plate. In addition, the misalignment condition of the coated regions of the two coating surfaces of the electrode plate is automatically determined based on a coating image, and deviation correction based on the misalignment condition of the coated regions of the two coating surfaces is also automatically performed, both of which are performed without manual operation. That is, this enables timely and accurate determination of the misalignment condition of the coated regions on the coating surfaces, and allows timely and accurate deviation correction based on the misalignment condition of the coated regions of the two coating surfaces, thereby achieving a rapid response to the coating deviation correction of the electrode plate, providing high efficiency and high deviation correction accuracy, and reducing the burden on a worker.

In some embodiments, the electrode plate inspection method further includes: determining a quality inspection region in the to-be-inspected image, where the quality inspection region includes one or a plurality of sub-regions in the width direction of the electrode plate; and performing quality inspection on the quality inspection region to obtain a quality inspection result of the quality inspection region.

In the above solution, the quality of the electrode plate can be automatically inspected to determine in a timely manner whether the electrode plate is abnormal, thereby avoiding the subsequent batch scrapping of the electrode plate.

In some embodiments, grayscale values of all types of sub-regions of the electrode plate in the acquired image respectively belong to different grayscale intervals; determining the quality inspection region in the to-be-inspected image includes: finding out, from the to-be-inspected image, a first pixel point with a grayscale value falling within a target grayscale interval; and obtaining a connected domain formed by the first pixel point as the quality inspection region; and/or, performing quality inspection on the quality inspection region to obtain the quality inspection result of the quality inspection region includes: determining, by using a grayscale distribution condition in the quality inspection region, whether the quality inspection region has a defect.

In the above solution, since the grayscale values of different types of sub-regions (e.g., a coated sub-region, an uncoated sub-region, and a ceramic sub-region) of the electrode plate in the acquired image are different, the grayscale values of the same type of sub-regions in the acquired image are basically the same, or in other words, the grayscale values of the same type of sub-regions in the acquired image may belong to a corresponding grayscale interval thereof, while different sub-regions correspond to different grayscale intervals. Therefore, regions belonging to the various types of sub-regions in the to-be-inspected image can be determined based on the grayscale values of pixel points in the to-be-inspected image, so that the required quality inspection region can be determined.

In some embodiments, the quality inspection region includes a ceramic sub-region and a coated sub-region, and the defect includes metal exposure in the ceramic sub-region or the coated sub-region; and/or determining, by using the grayscale distribution condition in the quality inspection region, whether the quality inspection region has a defect includes: finding out, from the quality inspection region, several second pixel points with grayscale values not falling within a target grayscale interval; determining at least one suspected defective region by using the several second pixel points; and determining, in response to the suspected defective region meeting a preset size requirement, that the suspected defective region has the defect, where the preset size requirement includes at least one of an area meeting a preset area condition and a width meeting a preset width condition.

In the above solution, quality inspection is performed on the ceramic sub-region and the coated sub-region of the electrode plate to determine whether the ceramic sub-region and the coated sub-region have metal exposure, so as to determine in a timely manner whether there is a defect in the electrode plate during the coating process, thereby avoiding subsequent batch scrapping caused by coating; and/or, the suspected defective region is used as a defective region present in the quality inspection region only when the suspected defective region meets the preset size requirement, instead of using all the determined suspected defective regions as the defective region present in the quality inspection region, thereby improving the accuracy of quality inspection.

In some embodiments, obtaining the to-be-inspected image acquired from the electrode plate includes: obtaining at least two initial images acquired from the electrode plate by at least two image acquisition apparatuses at a same acquisition moment, where the plurality of image acquisition apparatuses are arranged in the width direction of the electrode plate; determining an overlapping region in the at least two initial images; and removing the overlapping region of the at least two initial images, and stitching the at least two initial images with the overlapping region removed to obtain the to-be-inspected image; and/or, before determining the at least one edge capture region in the to-be-inspected image based on the preset edge capture region information, the electrode plate inspection method further includes: discarding the to-be-inspected image in response to the to-be-inspected image being an abnormal image; and/or, the to-be-inspected image is obtained by stitching the at least two initial images acquired by the at least two image acquisition apparatuses at the same acquisition moment, and before acquiring the to-be-inspected image acquired from the electrode plate, the electrode plate inspection method further includes: discarding the at least two initial images in response to the at least two initial images being abnormal.

In the above solution, the to-be-inspected image is generated by stitching the initial images acquired by the at least two image acquisition apparatuses, so that a capturing field of view of the image acquisition apparatus is expanded, making it suitable for image acquisition of a wide-width electrode plate; and/or an abnormal to-be-inspected image is not inspected, thereby reducing resource consumption; and/or an abnormal initial image is not stitched to generate the to-be-inspected image, thereby reducing resource consumption.

A second aspect of the present application provides a visual inspection system. The system includes at least one image acquisition apparatus, a processing apparatus, and an upper computer, where the at least one image acquisition apparatus is configured to acquire an image of an electrode plate; the processing apparatus is in communication connection with the at least one image acquisition apparatus, and is configured to inspect the electrode plate by using the image acquired by the at least one image acquisition apparatus to obtain an inspection result of the electrode plate, where the inspection result includes width information related to the electrode plate, and the width information is determined by using a first boundary line detected in at least one edge capture region of the image; and the upper computer is in communication connection with the processing apparatus, and is configured to display the image acquired by the image acquisition apparatus, and/or prompt the inspection result.

In the above solution, therefore, the processing apparatus can be configured to inspect the electrode plate by using the image acquired by the at least one image acquisition apparatus; that is, the processing apparatus of the visual inspection system can implement automatic inspection of the electrode plate.

Further, in the above solution, a monitoring device may be further disposed, and the monitoring device can be configured to display the image acquired by the image acquisition apparatus, so that relevant personnel can know the coating condition of the electrode plate in a timely manner; alternatively, the monitoring device can be configured to prompt the inspection result, so that relevant personnel can know the inspection status of the electrode plate in a timely manner, and then when it is known that the electrode plate is detected to be abnormal, corresponding processing can be performed in a timely manner to prevent batch scrapping caused by coating. Therefore, the visual inspection system can also integrate the electrode plate inspection function and the related information display function into a whole, which can not only realize automatic inspection of the electrode plate, but also realize image display and/or inspection result prompt.

In some embodiments, the image acquisition apparatus is a first-type acquisition apparatus. The system further includes a light source configured to provide capturing light for the first-type acquisition apparatus, the light source and the first-type acquisition apparatus are respectively located on two sides of a target normal, and the target normal is a normal of a tangent between the electrode plate and a roller for conveying the electrode plate, where a first distance is formed between a target tangent point and an intersection point between an optical axis of the first-type acquisition apparatus and an acquisition surface, the acquisition surface is a surface, facing the first-type acquisition apparatus, of the electrode plate, the target tangent point is a tangent point between the electrode plate and the roller for conveying the electrode plate, and the first distance enables an incident amount of light reflected by the roller from the light source and incident on the first-type acquisition apparatus to be less than a preset threshold; and/or a second distance between the first-type acquisition apparatus and the acquisition surface is related to a focal length of the first-type acquisition apparatus; and/or a first included angle is formed between illumination light of the light source and the target normal, a second included angle is formed between the optical axis of the first-type acquisition apparatus and the target normal, and at least one of the first included angle and the second included angle has a value sufficient to enable an illumination intensity in a capturing region of the first-type acquisition apparatus to meet requirements; and/or a third distance is formed between the light source and the acquisition surface.

In the above solution, the target tangent point and the intersection point between the optical axis of the first-type acquisition apparatus and the acquisition surface and are set according to the first distance, so that the incident amount of the light reflected by the roller from the light source and incident on the first-type acquisition apparatus is less than the preset threshold, thereby improving the quality of the image acquired for the acquisition surface; and/or, the second distance between the first-type acquisition apparatus and the acquisition surface is set to be related to the focal length of the first-type acquisition apparatus, so that both the first-type acquisition apparatus and the acquisition surface are at appropriate positions, and the first-type acquisition apparatus can acquire an image with a bright picture and consistent image quality without distortion; and/or, by setting the illumination light of the light source and the target normal to have the first included angle, and the optical axis of the first-type acquisition apparatus and the target normal to have the second included angle, the illumination intensity of the light source on the acquisition surface is the highest and the power consumption is the lowest.

In some embodiments, the image acquisition apparatus is a second-type acquisition apparatus, the second-type acquisition apparatus is connected to a plurality of acquisition cards corresponding to the second-type acquisition apparatus, and the plurality of acquisition cards corresponding to the second-type acquisition apparatus are connected to the processing apparatus, where the plurality of acquisition cards corresponding to the second-type acquisition apparatus are connected to each other through an inter-board synchronization cable, and an encoder of the system transmits an acquisition trigger signal to one of the acquisition cards, the one of the acquisition cards and the remaining acquisition cards corresponding to the second-type acquisition apparatus are synchronized through the inter-board synchronization cable to trigger the second-type acquisition apparatus for image acquisition.

In the above solution, the second-type acquisition apparatus can be triggered by the acquisition card for image acquisition, so that triggering control over the second-type acquisition apparatus is more flexible and convenient.

In some embodiments, the image acquisition apparatus is a second-type acquisition apparatus, the second-type acquisition apparatus is connected to a plurality of acquisition cards corresponding to the second-type acquisition apparatus, and the plurality of acquisition cards corresponding to the second-type acquisition apparatus are connected to the processing apparatus, where the system further includes a signal distributor connected to the encoder, and the acquisition trigger signal from the encoder outputs a plurality of channels of acquisition trigger signals through the signal distributor to be respectively transmitted to all the acquisition cards, so as to trigger the second-type acquisition apparatus for image acquisition.

In the above solution, the plurality of acquisition cards of the second-type acquisition apparatus can be simultaneously triggered by using the signal distributor connected to the encoder.

In some embodiments, the second-type acquisition apparatus is a macro camera; and/or, a third distance is formed between the second-type acquisition apparatus and the acquisition surface, and the acquisition surface is a surface, facing the first-type acquisition apparatus, of the electrode plate.

In the above solution, the macro camera can capture a high-resolution image at a high speed in a wide range, and can perform image acquisition at a short distance, thereby saving space; and/or, the distance between the second-type acquisition apparatus and the acquisition surface can be flexibly set.

In some embodiments, the at least one image acquisition apparatus includes at least one apparatus group, each apparatus group includes at least one image acquisition apparatus, and the different apparatus groups are respectively configured to acquire different surfaces of the electrode plate.

In the above solution, by disposing the plurality of apparatus groups, image acquisition can be performed on the different surfaces of the electrode plate at the same time, so that the coating condition of front and back surfaces of the electrode plate and the like can be known in a timely manner.

In some embodiments, the at least one apparatus group includes a first apparatus group and a second apparatus group, and the processing apparatus includes a primary processing apparatus and a secondary processing apparatus; the primary processing apparatus is connected to the first apparatus group, and is configured to inspect an image acquired by the first apparatus group to obtain a first inspection result; the secondary processing apparatus is connected to the second apparatus group, and is configured to inspect an image acquired by the second apparatus group to obtain a second inspection result, and send at least one of the image acquired by the second apparatus group and the second inspection result to the primary processing apparatus; the primary processing apparatus is connected to the monitoring device, and is further configured to send the images acquired by the first apparatus group and the second apparatus group to the monitoring device, and/or prompt the first inspection result and the second inspection result.

In the above solution, when the visual inspection system includes the two apparatus groups, one processing apparatus cannot support the normal operation of the two apparatus groups at the same time, so the primary and secondary processing apparatuses are disposed, and the primary and secondary processing apparatuses are respectively connected to one apparatus group to ensure the normal operation thereof.

In some embodiments, the image acquisition apparatus is a first-type acquisition apparatus, the system further includes two light source modules, each light source module includes a light source and a light source controller connected to each other, and the light source controllers of the two light source modules are connected to the primary processing apparatus and the secondary processing apparatus, respectively, so that the correspondingly connected processing apparatus instructs the light source controller to control an operation of the corresponding light source; and/or, the primary processing apparatus and the secondary processing apparatus are connected through a network.

In the above solution, illumination parameters of the light source can be flexibly controlled by the processing apparatus; and/or the primary processing apparatus and the secondary processing apparatus are connected through the network, so that long-distance communication connection may be implemented, with little impact caused by a disposing position region.

In some embodiments, at least one upper computer is included, and the at least one upper computer is disposed at a preset position of a coating system configured to coat the electrode plate.

In the above solution, the number of the monitoring device and the specific position of the monitoring device can be flexibly set.

A third aspect of the present application provides a coating system. The coating system includes an unwinding mechanism, configured to unwind an electrode plate; a first coating mechanism, configured to coat a first coating surface of the unwound electrode plate; a second coating mechanism, disposed behind the first coating mechanism and configured to coat a second coating surface of the electrode plate; a drying mechanism, configured to dry the electrode plate after being coated by the first coating mechanism and the second coating mechanism; a rewinding mechanism, configured to rewind the dried electrode plate; a visual inspection system, where the visual inspection system includes at least one image acquisition apparatus and a processing apparatus, the image acquisition apparatus is configured to acquire an image of the electrode plate to obtain a to-be-inspected image; and the processing apparatus is configured to: determine at least one edge capture region in the to-be-inspected image based on preset edge capture region information, where the preset edge capture region information includes position information and/or size information of the edge capture region; perform boundary detection on each edge capture region to obtain a first boundary line in each edge capture region, where the first boundary line is used for dividing different sub-regions of the electrode plate arranged in a width direction; and determine, by using the first boundary line in each edge capture region, width information related to the electrode plate.

In some embodiments, the visual inspection system further includes a first image acquisition apparatus and a second image acquisition apparatus, the first image acquisition apparatus and the second image acquisition apparatus are disposed behind the second coating mechanism, the first image acquisition apparatus is disposed on one side of the first coating surface, and the second image acquisition apparatus is disposed on one side of the second coating surface.

In some embodiments, the visual inspection system further includes a deviation correcting mechanism, where the deviation correcting mechanism is configured to perform deviation correction on the coating mechanism of the coating surface of the electrode plate.

It should be understood that both the foregoing general description and the following detailed description are exemplary and explanatory only and are not construed as limiting the present application.

### BRIEF DESCRIPTION OF THE DRAWINGS

The drawings herein are incorporated into the specification and constitute a part of the specification. These drawings illustrate embodiments consistent with the present application and are used in conjunction with the specification to illustrate the technical solutions of the present application.
FIG. 1 is a schematic flowchart of an embodiment of an electrode plate inspection method according to the present application;
FIG. 2 is a schematic diagram of an embodiment of a to-be-inspected image according to the present application;
FIG. 3 is a schematic diagram of another embodiment of the to-be-inspected image according to the present application;
FIG. 4 is a schematic diagram of a layout of an image acquisition apparatus according to the present application;
FIG. 5 is a schematic diagram of arrangement of two image acquisition apparatuses according to the present application;
FIG. 6 is a schematic structural diagram of an embodiment of a coating system according to the present application;
FIG. 7 is a schematic diagram of an embodiment of an edge capture region according to the present application;
FIG. 8 is a schematic flowchart of another embodiment of the electrode plate inspection method according to the present application;
FIG. 9 is a schematic flowchart of another embodiment of the electrode plate inspection method according to the present application;
FIG. 10 is a schematic flowchart of an embodiment of step S91 shown in FIG. 9;
FIG. 11 is a schematic flowchart of an embodiment of determining, by using the grayscale distribution condition of a quality inspection region, whether the quality inspection region has a defect according to the present application;
FIG. 12 is a schematic flowchart of an embodiment of step S11 shown in FIG. 1;
FIG. 13 is a schematic flowchart of an embodiment of generating preset edge capture region information according to the present application;
FIG. 14 is a schematic diagram of an embodiment of a boundary detection region according to the present application;
FIG. 15 is a schematic flowchart of an embodiment of step S13 shown in FIG. 1;
FIG. 16 is a schematic diagram of an embodiment of a caliper tool according to the present application;
FIG. 17 is a schematic flowchart of an embodiment of step S14 shown in FIG. 1;
FIG. 18 is a schematic flowchart of an embodiment of step S171 shown in FIG. 17;
FIG. 19 is a schematic diagram of an electrical topology structure of an embodiment of a visual inspection system according to the present application;
FIG. 20 is a schematic diagram of an electrical topology structure of another embodiment of the visual inspection system according to the present application;
FIG. 21 is a schematic diagram of an embodiment of a capturing point of the image acquisition apparatus according to the present application;
FIG. 22 is a schematic diagram of erection of an embodiment of the image acquisition apparatus according to the present application;
FIG. 23 is a schematic diagram of an embodiment of electrical wiring of a macro camera according to the present application; and
FIG. 24 is a schematic diagram of an embodiment of imaging of the macro camera according to the present application.

### DETAILED DESCRIPTION

The following describes in detail the solutions in embodiments of the present application with reference to the drawings in this specification.

In the following description, for the purpose of illustration rather than limitation, specific details such as specific system structures, interfaces, and technologies are proposed to facilitate a thorough understanding of the present application.

The term "and/or" herein is only an association relationship that describes the associated objects, and indicates that there may be three relationships. For example, A and/or B may indicate that: only A is present, both A and B are present, and only B is present. In addition, the character "/" herein generally indicates an "or" relationship between the associated objects before and after the "/". In addition, "plurality of" herein indicates two or more than two. Furthermore, the term "at least one type" herein indicates any one of a plurality of types or a combination of at least two of the plurality of types. For example, including at least one of A, B, and C may indicate including any one or more elements selected from the set consisting of A, B, and C.

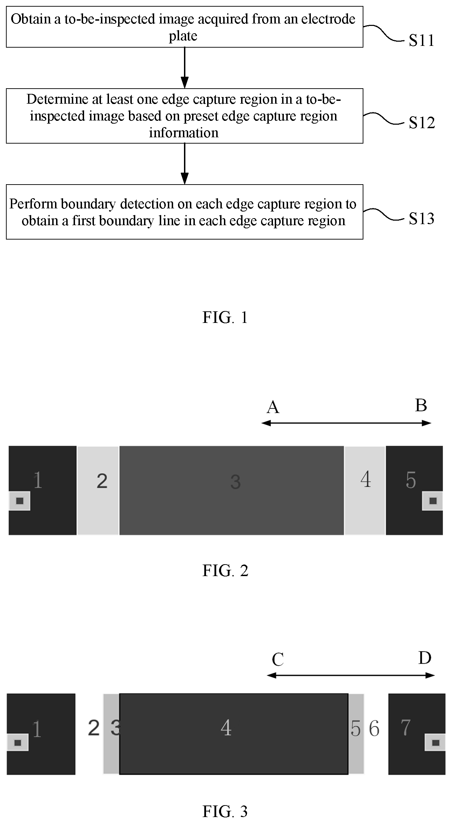

Referring to FIG. 1, FIG. 1 is a schematic flowchart of an embodiment of an electrode plate inspection method according to the present application. It should be noted that if substantially identical results are achieved, the embodiments of the present application are not limited to the step sequence shown in FIG. 1. As shown in FIG. 1, this embodiment includes:

In step S11, a to-be-inspected image acquired from an electrode plate is obtained.

The method of this embodiment is used for automatically detecting width information related to the electrode plate, which improves the detection accuracy and efficiency of the width information related to the electrode plate, and greatly reduces width measurement errors, thereby ensuring that the electrode plate with the width meeting the process requirement is subsequently slit by laser based on the detected width information, preventing deviating cutting of a cutter, and further ensuring the safety and capacity consistency of the battery made based on the electrode plate with the width meeting the process requirement.

In this embodiment, the to-be-inspected image acquired from the electrode plate is obtained. When the electrode plate is an aluminum foil current collector, a positive electrode material (e.g., LEP or NCM) is coated on the aluminum foil current collector; when the electrode plate is a copper foil current collector, a negative electrode material (e.g., graphite or LTO) is coated on the copper foil current collector. As a negative electrode current collector of the battery, the copper foil serves as a carrier for a negative electrode active material, and is also used for negative electrode electron collection and conduction, and the function thereof is to collect the current generated by a battery active substance to generate a larger output current. As a positive electrode current collector of the battery, the aluminum foil serves as a carrier for a positive electrode active material, and the battery using the aluminum foil current collector has a strong charging and discharging capability, and is not prone to be corroded by an electrolytic solution, which can enhance the adhesion to the positive electrode active substance.

For example, as shown in FIGs. 2 and 3, FIG. 2 is a schematic diagram of an embodiment of a to-be-inspected image according to the present application, and FIG. 3 is a schematic diagram of another embodiment of the to-be-inspected image according to the present application. The to-be-inspected image shown in FIG. 2 is acquired from an anode electrode plate, and the anode electrode plate includes roller sub-regions (a region 1 and a region 5 in FIG. 2), uncoated sub-regions (a region 2 and a region 4 in FIG. 2), and a coated sub-region (a region 3 in FIG. 2) that are arranged in a width direction (an AB direction and a BA direction in FIG. 2) of the electrode plate. The to-be-inspected image shown in FIG. 3 is acquired from a cathode electrode plate, and the cathode electrode plate includes roller sub-regions (a region 1 and a region 2 in FIG. 3), uncoated sub-regions (a region 2 and a region 6 in FIG. 3), ceramic sub-regions (a region 3 and a region 5 in FIG. 3), and a coated sub-region (a region 4 in FIG. 3) that are arranged in a width direction (a CD direction and a DC direction in FIG. 3) of the electrode plate.

In an embodiment, an image acquisition apparatus may be used to acquire an image of the electrode plate in real time, so as to obtain the to-be-inspected image acquired from the electrode plate. The image acquisition apparatus may be a Charge Coupled Device (CCD) camera or the like, which is not limited herein. Certainly, in other embodiments, the to-be-inspected image acquired from the electrode plate may also be obtained from cloud storage or local storage, which is not specifically limited herein.

Due to the limited capturing field of view of a single image acquisition apparatus, the size of the electrode plate that can be acquired is limited; that is, for a wide-width electrode plate, the single image acquisition apparatus cannot acquire a to-be-inspected image including the complete electrode plate. Therefore, in an embodiment, at least two image acquisition apparatuses arranged in the width direction of the electrode plate are used to simultaneously acquire an image of the electrode plate to obtain the to-be-inspected image acquired from the electrode plate. Certainly, in other embodiments, for a narrow-width electrode plate, a single image acquisition apparatus may also be used to acquire an image of the electrode plate to obtain the to-be-inspected image acquired from the electrode plate.

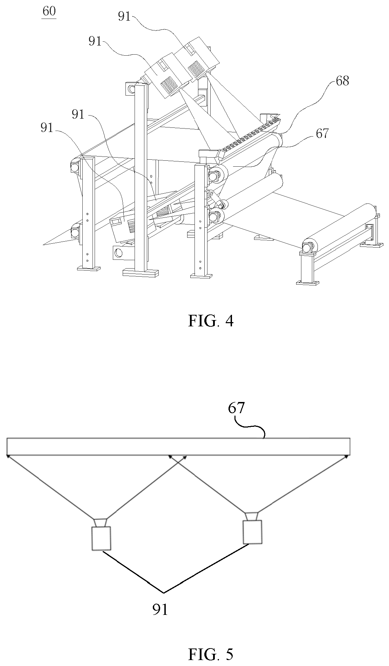

The number of the image acquisition apparatus for acquiring the image of the electrode plate at the same acquisition moment is not limited, and may be specifically set according to actual needs. For example, as shown in FIGs. 4 and 5, FIG. 4 is a schematic diagram of a layout of the image acquisition apparatus according to the present application, and FIG. 5 is a schematic diagram of arrangement of the two image acquisition apparatuses according to the present application; the width of the wide-width electrode plate is 1500 mm to 1600 mm, and the width of the field of view of the single image acquisition apparatus is 775 mm, so the two image acquisition apparatuses arranged in the width direction of the electrode plate are used to acquire the image of the electrode plate at the same moment, so as to obtain the to-be-inspected image acquired from the electrode plate, and the to-be-inspected image includes the complete electrode plate. For another example, the width of the narrow-width electrode plate is about 700 mm, and the single image acquisition apparatus may be disposed to acquire the to-be-inspected image including the complete electrode plate.

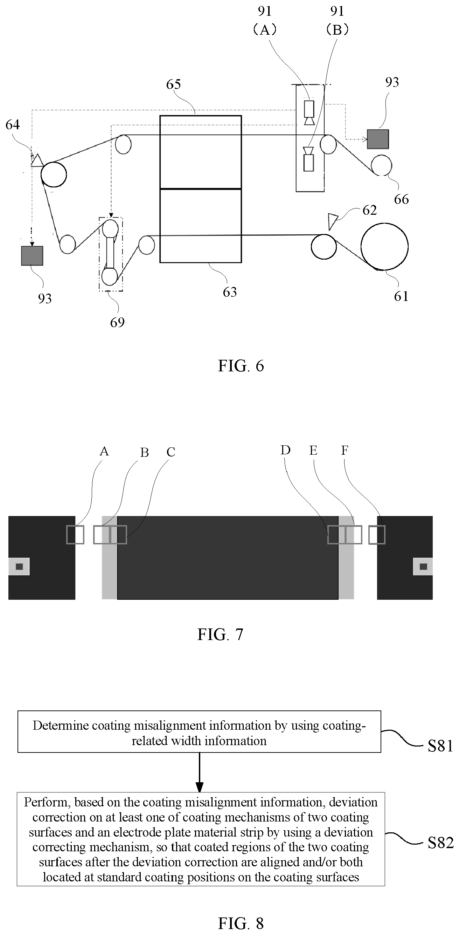

In a specific embodiment, as shown in FIG. 6, FIG. 6 is a schematic structural diagram of an embodiment of a coating system according to the present application. A coating system 60 includes an unwinding mechanism 61, a surface-A die head 62 (a first coating mechanism) corresponding to one coating surface (a first coating surface), a lower-layer oven 63 corresponding to one coating surface, a surface-B die head 64 (a second coating mechanism) corresponding to the other coating surface (a second coating surface), an upper-layer oven 65 corresponding to the other coating surface (the second coating surface), two image acquisition apparatuses 91, a rewinding mechanism 66, a roller 67, and a light source 68. The electrode plate is configured to be wound around the unwinding mechanism 61, sequentially passes through the surface-A die head 62, the lower-layer oven 63, the surface-B die head 64, and the upper-layer oven 65, and then is rewound by the rewinding mechanism 66. The surface-A die head 62 is configured to coat the first coating surface (one coating surface) of the electrode plate so as to apply a positive or negative electrode active material on the first coating surface of the electrode plate, the lower-layer oven 63 is configured to dry a wet film formed after coating of the first coating surface, the surface-B die head 64 is configured to coat the second coating surface (the other coating surface) of the electrode plate so as to apply the positive or negative electrode active material on the second coating surface of the electrode plate, and the upper-layer oven 65 is configured to dry a wet film formed after coating of the second coating surface, so that the electrode plate in a dry film state is output from the upper-layer oven, which facilitates rewinding by the rewinding mechanism 66, thereby facilitating the subsequent cell winding operation.

After being output from a second drying mechanism, the electrode plate passes through two image acquisition apparatuses. One image acquisition apparatus acquires an image of the first coating surface of the electrode plate, while the other image acquisition apparatus acquires an image of the second coating surface of the electrode plate, so as to obtain the to-be-inspected image corresponding to each coating surface of the electrode plate. That is to say, the two image acquisition apparatuses are added to the coating system, and the coating and deviation correction of the electrode plate are integrated, so that coating images of two opposite coating surfaces of the electrode plate can be acquired in a timely manner after the coating process is completed but before rewinding.

In addition, two sides may each be provided with two image acquisition apparatuses; that is, after the electrode plate is output from the second drying mechanism, the electrode plate passes through the two image acquisition apparatuses located on an upper portion and the two image acquisition apparatuses located on a lower portion (the two image acquisition apparatuses located on the same side are arranged in the width direction of the electrode plate). The two image acquisition apparatuses simultaneously acquire the image of the first coating surface of the electrode plate, and the two image acquisition apparatuses simultaneously acquire the image of the second coating surface of the electrode plate, so as to obtain the to-be-inspected images corresponding to all the coating surfaces.

In a specific embodiment, the to-be-inspected image is obtained by stitching at least two initial images acquired by at least two image acquisition apparatuses at the same acquisition moment. Before the to-be-inspected image acquired from the electrode plate is obtained, the at least two initial images are discarded in response to the at least two initial images being abnormal. That is to say, the abnormal initial images are not stitched to generate the to-be-inspected image, thereby reducing resource consumption. The type of the abnormal image is not limited. For example, the abnormal image may be an initial image with low definition, an initial image with an undesirable size, or the like.

In step S12, at least one edge capture region is determined in the to-be-inspected image based on preset edge capture region information.

In this embodiment, the at least one edge capture region is determined in the to-be-inspected image based on the preset edge capture region information. The preset edge capture region information includes position information and/or size information of the edge capture region. The preset edge capture region information includes the position information and/or the size information of the edge capture region, so that the edge capture region in the to-be-inspected image can be quickly positioned based on the preset edge capture region information, thereby enabling the subsequent rapid determination of the width information related to the electrode plate, and improving the efficiency of detecting the electrode plate.

The position information of the edge capture region included in the preset edge capture region information is not limited, and may be specifically set according to actual needs. For example, the position information of the edge capture region included in the preset edge capture region information refers to the center of the edge capture region. For another example, the edge capture region is a rectangle, and the position information of the edge capture region included in the preset edge capture region information refers to position coordinates of the vertex of the upper left corner of the edge capture region, position coordinates of the vertex of the lower right corner of the edge capture region, and the like. In addition, the size information of the edge capture region included in the preset edge capture region information is not limited. For example, the edge capture region included in the preset edge capture region information is a square region with a side length of 2 mm. For another example, the edge capture region included in the preset edge capture region information is a rectangular region with a length of 2 mm and a width of 3 mm. For another example, the edge capture region included in the preset edge capture region information is a circular region with a radius of 2 mm.

For example, as shown in FIG. 7, FIG. 7 is a schematic diagram of an embodiment of the edge capture region according to the present application. Based on the preset edge capture region information, six edge capture regions (A, B, C, D, E, and F) are determined in the to-be-inspected image, and the six edge capture regions are square regions.

In an embodiment, in a case that the electrode plate is an anode electrode plate, at least four edge capture regions are determined in the to-be-inspected image based on the preset edge capture region information, or in a case that the electrode plate is a cathode electrode plate, at least six edge capture regions are determined in the to-be-inspected image based on the preset edge capture region information. For example, as shown in FIG. 7, FIG. 7 shows a cathode electrode plate, and six edge capture regions are determined in the to-be-inspected image based on the preset edge capture region information.

In an embodiment, the preset edge capture region information is automatically determined and generated before the at least one edge capture region is determined in the to-be-inspected image, and the efficiency of determining and generating the preset edge capture region information is higher. Certainly, in other embodiments, the preset edge capture region information may also be manually set by a user, which is not specifically limited herein.

In an embodiment, before the at least one edge capture region is determined in the to-be-inspected image, the to-be-inspected image is discarded in response to the to-be-inspected image being an abnormal image. That is to say, the abnormal to-be-inspected image is not inspected, thereby reducing resource consumption. The type of the abnormal image is not limited. For example, the abnormal image may be a to-be-inspected image with low definition, a to-be-inspected image with an undesirable size, or a to-be-inspected image with an insufficient number of sub-regions.

In step S13, boundary detection is performed on each edge capture region to obtain a first boundary line in each edge capture region.

In this embodiment, the boundary detection is performed on each edge capture region to obtain the first boundary line in each edge capture region. The first boundary line is used for dividing different sub-regions of the electrode plate arranged in the width direction.

In an embodiment, the boundary detection of all the edge capture regions is performed by multiple threads. That is to say, the boundary detection is simultaneously performed on the plurality of edge capture regions in the to-be-inspected image, thereby improving the efficiency of obtaining the first boundary line in each edge capture region.

In a specific embodiment, the boundary detection of each edge capture region is performed by using one of the threads. That is to say, the boundary detection of one edge capture region corresponds to one of the threads; that is, the first boundary lines of all the edge capture regions in the to-be-inspected image are simultaneously captured, so as to accelerate the computation speed and shorten the processing time for a single to-be-inspected image.

Since different sub-regions of the electrode plate have different grayscale values, or in other words, since different sub-regions of the electrode plate belong to different grayscale intervals, a significant grayscale disparity between the two sides of a certain line in the edge capture region indicates that the left and right sides of the line belong to different sub-regions of the electrode plate, and this line is a boundary line between two sub-regions in the edge capture region. Therefore, in an embodiment, the first boundary line in the edge capture region may be determined based on the grayscale distribution condition of the edge capture region.

In step S14, the width information related to the electrode plate is determined by using the first boundary line in each edge capture region.

In this embodiment, the width information related to the electrode plate is determined by using the first boundary line in each edge capture region. Every two first boundary lines define a sub-region, and the width of the sub-region corresponding to two first boundary lines can be determined by using the distance between the two first boundary lines corresponding to the sub-region.

Optionally, the width information related to the electrode plate includes, but is not limited to, the width of a coated sub-region, the width of a ceramic sub-region, the width of the electrode plate, the width of an uncoated sub-region, and the width of a roller sub-region.

In the above embodiment, the at least one edge capture region is determined in the to-be-inspected image based on the preset edge capture region information, the boundary detection is performed on each edge capture region to obtain the first boundary line in each edge capture region, and the width information related to the electrode plate is determined by using the first boundary line in each edge capture region. Therefore, automatic inspection of the electrode plate can be achieved.

Further, in the above solution, the width information related to the electrode plate can also be determined by using the preset edge capture region, so as to automatically detect the width information related to the electrode plate. In addition, the preset edge capture region does not need to be set by a user, thereby improving the efficiency of detecting the width information related to the electrode plate.

In an embodiment, as shown in FIG. 8, FIG. 8 is a schematic flowchart of another embodiment of the electrode plate inspection method according to the present application. The width information includes coating-related width information capable of characterizing positions and/or widths of coated regions of two coating surfaces of the electrode plate; after the width information related to the electrode plate is determined by using the first boundary line in each edge capture region, the coating deviation correction of the electrode plate is further performed, which specifically includes the following steps:
In step S81, coating misalignment information is determined by using the coating-related width information.

In this embodiment, the coating misalignment information is determined by using the coating-related width information, where the coating misalignment information characterizes the misalignment condition of the coated region. Since the width information includes the coating-related width information capable of characterizing the positions and/or widths of the coated regions of the two coating surfaces of the electrode plate, the misalignment condition between the coated regions in the two coating surfaces (i.e., whether the coated regions of the two coating surfaces are aligned) can be determined based on the coating-related width information; alternatively, the misalignment condition between the coated regions on the coating surfaces and standard coating positions on the coating surfaces (i.e., whether the coated regions on the coating surfaces are located at the standard coating positions on the coating surfaces) can be determined based on the coating-related width information.

In an embodiment, the coating misalignment information includes second misalignment information, and the second misalignment information characterizes the misalignment condition between the coated regions of the two coating surfaces. Subsequently, the region deviation correction of the coated regions of the two coating surfaces is performed based on the second misalignment information, so that the coated regions of the two coating surfaces after the deviation correction are aligned.

In other embodiments, the coating misalignment information includes first misalignment information and second misalignment information. The first misalignment information characterizes the misalignment condition between the coated region of one coating surface and an indicated coating position of the coating surface, while the second misalignment information characterizes the misalignment condition between the coated regions of the two coating surfaces. Subsequently, the deviation correction of the position of the coated region on the coating surface is performed based on the first misalignment information, so that the coating surface corresponding to the first misalignment information after the deviation correction is located at the standard coating position on the coating surface. Similarly, the region deviation correction of the coated regions of the two coating surfaces is performed based on the second misalignment information, so that the coated regions of the two coating surfaces after the deviation correction are aligned. Since the coating surface corresponding to the first misalignment information after the deviation correction is located at the standard coating position on the coating surface, the coated region on the other coating surface aligned with the coating surface after the deviation correction is also naturally located at the standard coating position on the corresponding coating surface. Therefore, subsequently, deviation correction is performed based on the first misalignment information and the second misalignment information, so that the coated regions of the two coating surfaces after deviation correction are aligned and both located at the standard coating positions on the coating surfaces.

It should be noted that the two coating surfaces are front and back coating surfaces of the same electrode plate, so the standard coating positions corresponding to the coating surfaces are the same.

Since the standard coating positions of the two coating surfaces of the same electrode plate are the same, when the coated regions on the two coating surfaces are both located at the standard coating positions on the corresponding coating surfaces, the coated regions on the two coating surfaces are necessarily aligned and both located at the standard coating positions on the coating surfaces. Therefore, in other embodiments, the coating misalignment information includes two pieces of first misalignment information. One piece of first misalignment information characterizes the misalignment condition between the coated region of one coating surface and the standard coating position of the coating surface, while the other piece of first misalignment information characterizes the misalignment condition between the coated region of the other coating surface and the standard coating position of the coating surface. Subsequently, the deviation correction of the position of one coated region on the corresponding coating surface is performed based on one piece of first misalignment information, so that the coated region corresponding to the first misalignment information after the deviation correction is located at the standard coating position on the corresponding coating surface. Similarly, the position deviation correction of the other coated region on the corresponding coating surface is performed based on the other piece of first misalignment information, so that the coated region corresponding to the first misalignment information after the deviation correction is located at the standard coating position on the corresponding coating surface. Therefore, subsequently, the deviation correction is performed based on the two pieces of first misalignment information, so that the coated regions of the two coating surfaces after the deviation correction are aligned and both located at the standard coating positions on the coating surfaces.

In step S82, based on the coating misalignment information, deviation correction is performed on at least one of the coating mechanisms of the two coating surfaces and the electrode plate by using a deviation correcting mechanism, so that the coated regions of the two coating surfaces after the deviation correction are aligned and/or both located at the standard coating positions on the coating surfaces.

In this embodiment, based on the coating misalignment information, the deviation correction is performed on at least one of the coating mechanisms of the two coating surfaces and the electrode plate by using the deviation correcting mechanism, so that the coated regions of the two coating surfaces after the deviation correction are aligned and/or both located at the standard coating positions on the coating surfaces. That is to say, the deviation correction is performed in a timely manner based on the misalignment condition of the coated regions on the coating surfaces of the electrode plate, so as to enable the coated regions of the two coating surfaces of the electrode plate to be aligned and both located at the standard coating positions on the coating surfaces, ensuring the quality of the electrode plate, thereby ensuring the capacity consistency, safety, and reliability of cells subsequently manufactured based on the electrode plate. In addition, the misalignment condition of the coated regions of the two coating surfaces of the electrode plate is automatically determined based on the coating image, and the deviation correction based on the misalignment condition of the coated regions of the two coating surfaces is also automatically performed, both of which are performed without manual operation. That is, the coating deviation correction method for the electrode plate provided by the present application enables timely and accurate determination of the misalignment condition of the coated regions on the coating surfaces, and allows timely and accurate deviation correction based on the misalignment condition of the coated regions of the two coating surfaces, thereby achieving a rapid response to the coating deviation correction of the electrode plate, providing high efficiency and high deviation correction accuracy, and reducing the burden on a worker.

It should be noted that it is not limited to the situation where the deviation correction is necessarily performed on the coating mechanisms of the two coating surfaces, so that the coated regions of the two coating surfaces after the deviation correction are aligned and both located at the standard coating positions on the coating surfaces. For example, deviation correction may be performed on the coating mechanisms of the two coating surfaces respectively, or deviation correction may be performed on the coating mechanism of one coating surface and the electrode plate, or deviation correction may be performed on the coating mechanisms of the two coating surfaces and the electrode plate.

In addition, the coated regions of the two coating surfaces after the deviation correction being enabled to be aligned and both located at the standard coating positions on the coating surfaces means that after two coating surfaces of a new substrate material strip are subsequently coated by the corresponding coating mechanisms, the coated regions of the two coating surfaces are aligned and both located at the standard coating positions on the coating surfaces. That is to say, performing the deviation correction on at least two of the coating mechanisms of the two coating surfaces and the electrode plate is to prevent the subsequent coating of the electrode plate from misalignment; the coating condition for the electrode plate corresponding to the coating images cannot be further adjusted.

In an embodiment, as shown in FIG. 6, the coating system further includes a deviation correcting mechanism, and the deviation correction may be performed by using the deviation correcting mechanism, so that the coated regions of the two coating surfaces after the deviation correction are aligned and/or both located at the standard coating positions on the coating surfaces. In a specific embodiment, the coating system includes a first deviation correcting mechanism and a second deviation correcting mechanism. The first deviation correcting mechanism is disposed between the unwinding mechanism and the first coating mechanism, and the second deviation correcting mechanism is disposed between a first drying mechanism and the second coating mechanism. The first coating mechanism and/or the electrode plate can be subjected to deviation correction by using the first deviation correcting mechanism, and the second coating mechanism and/or the electrode plate can be subjected to deviation correction by using the second deviation correcting mechanism.

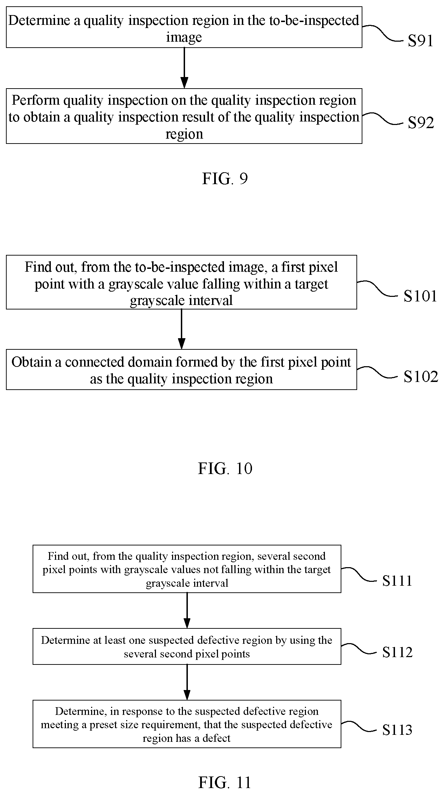

If the electrode plate is abnormal, the quality of a battery generated based on the electrode plate is affected, for example, resulting in poor capacitance consistency, low safety, high self-discharge, and capacity attenuation. Therefore, in an embodiment, as shown in FIG. 9, FIG. 9 is a schematic flowchart of another embodiment of the electrode plate inspection method according to the present application. It is also necessary to inspect the quality of the electrode plate to avoid the subsequent batch scrapping of the electrode plate, which specifically includes the following steps:
In step S91, a quality inspection region in the to-be-inspected image is determined.

In this embodiment, the quality inspection region in the to-be-inspected image is determined, where the quality inspection region includes one or a plurality of sub-regions in the width direction of the electrode plate.

In an embodiment, the quality inspection region refers to all the sub-regions in the width direction of the electrode plate. Certainly, in other embodiments, the quality inspection region refers to a part of the sub-regions in the width direction of the electrode plate, which is not limited herein.

If the coated active substance is separated during the drying process of the coated electrode plate, the capacity of the battery prepared based on the electrode plate is low, the internal resistance is unstable, the number of cycles is low, and even an internal short circuit of the battery may be formed, which may lead to fire and explosion of the battery in severe cases. Therefore, in a specific embodiment, if it is desired to detect whether the electrode plate has a metal exposure flaw/defect, the coated sub-region may be defined and determined as the quality inspection region, so as to reduce the size of a region required to be inspected, thereby improving the efficiency of quality inspection. Certainly, in other specific embodiments, if it is desired to detect whether the electrode plate has a metal exposure flaw/defect, all the sub-regions may also be used as the quality inspection region.

For example, as shown in FIG. 2, detecting whether the electrode plate has a metal exposure flaw/defect is used as an example: since it is necessary to detect whether the electrode plate has a metal exposure flaw/defect, the coated sub-region (a region 3 in FIG. 2) in FIG. 2 is used as the quality inspection region. For another example, as shown in FIG. 3, detecting whether the electrode plate has a metal exposure flaw/defect is used as an example: since it is necessary to detect whether the electrode plate has a metal exposure flaw/defect, the coated sub-region (a region 3 in FIG. 3) and the ceramic sub-region (a region 2 and a region 5 in FIG. 3) in FIG. 3 are both used as the quality inspection region.

Since the grayscale values of different types of sub-regions (e.g., a coated sub-region, an uncoated sub-region, and a ceramic sub-region) of the electrode plate in the acquired image are different, the grayscale values of the same type of sub-regions in the acquired image are basically the same, or in other words, the grayscale values of the same type of sub-regions in the acquired image may belong to a corresponding grayscale interval thereof, while different sub-regions correspond to different grayscale intervals. Therefore, regions belonging to the various types of sub-regions in the to-be-inspected image can be determined based on the grayscale values of pixel points in the to-be-inspected image, so that the required quality inspection region can be determined. Therefore, in an embodiment, as shown in FIG. 10, FIG. 10 is a schematic flowchart of an embodiment of step S91 shown in FIG. 9, the grayscale values of all types of sub-regions of the electrode plate in the acquired to-be-inspected image respectively belong to different grayscale intervals, and the step that the quality inspection region in the to-be-inspected image is determined specifically includes the following sub-steps.

In step S101, a first pixel point with a grayscale value falling within a target grayscale interval is found out from the to-be-inspected image.

In this embodiment, the first pixel point with the grayscale value falling within the target grayscale interval is found out from the to-be-inspected image.

For example, a grayscale interval of the coated sub-region has a grayscale value ranging from 40 to 60, and a grayscale interval of the uncoated sub-region has a grayscale value of greater than 200. If the coated sub-region needs to be used as the quality inspection region, the grayscale interval with the grayscale value ranging from 40 to 60 is used as the target grayscale interval, and the first pixel point with the grayscale value ranging from 40 to 60 is found out from the to-be-inspected image.

For example, a grayscale interval of the coated sub-region has a grayscale value ranging from 20 to 40, a grayscale interval of the uncoated sub-region has a grayscale value of greater than 220, and a grayscale interval of the ceramic sub-region has a grayscale value ranging from 110 to 130. If the coated sub-region and the ceramic sub-region need to be used as the quality inspection region, the grayscale interval with the grayscale value ranging from 20 to 40 and the grayscale interval with the grayscale value ranging from 110 to 130 are used as the target grayscale interval, and the first pixel points with the grayscale value ranging from 20 to 40 and with the grayscale value ranging from 110 to 130 are found out from the to-be-inspected image.

In step S102, a connected domain formed by the first pixel point is obtained as the quality inspection region.

In this embodiment, the connected domain formed by the first pixel point is obtained as the quality inspection region. That is to say, the region formed by the first pixel point is used as the quality inspection region.

In step S92, quality inspection is performed on the quality inspection region to obtain a quality inspection result of the quality inspection region.

In this embodiment, quality inspection is performed on the quality inspection region to obtain the quality inspection result of the quality inspection region. Quality inspection is performed on the quality inspection region to determine whether the quality inspection region has a defect/flaw.

One quality inspection region corresponds to one type of sub-region of the electrode plate. Therefore, when the sub-region corresponding to the quality inspection region has high quality and has no defects/flaws, the grayscale distribution of the quality inspection region is uniform and consistent, without an obvious difference. When the sub-region corresponding to the quality inspection region has a defect/flaw, the grayscale distribution of a defect/flaw portion in the quality inspection region is obviously different from the grayscale distribution of other portions of the quality inspection region. Therefore, in an embodiment, the step that quality inspection is performed on the quality inspection region to obtain the quality inspection result of the quality inspection region specifically includes: whether the quality inspection region has a defect is determined by using the grayscale distribution condition in the quality inspection region. Whether the quality inspection region has a defect can be accurately and quickly determined by the difference in the grayscale distribution in the quality inspection region.

In a specific embodiment, the quality inspection region includes a ceramic sub-region and a coated sub-region, and the defect includes metal exposure in the ceramic sub-region or the coated sub-region. Quality inspection is performed on the ceramic sub-region and the coated sub-region of the electrode plate to determine whether the ceramic sub-region and the coated sub-region have metal exposure, so as to determine in a timely manner whether there is a defect in the electrode plate during the coating process, thereby avoiding subsequent batch scrapping caused by coating. In other specific embodiments, the quality inspection region includes a ceramic sub-region and a coated sub-region, and the defect may also be bubbles, particles, pinholes, or the like in the ceramic sub-region or the coated sub-region. In other specific embodiments, the quality inspection region includes each sub-region of the electrode plate, and the defect may be bending, a crease, an impress, a dry crack, or the like in each sub-region. In other specific embodiments, the quality inspection region includes edge sub-regions of the electrode plate, and the defect may be material shedding, a notch, a crack, or the like in each edge sub-region.

In an embodiment, as shown in FIG. 11, FIG. 11 is a schematic flowchart of an embodiment of determining, by using the grayscale distribution condition of the quality inspection region, whether the quality inspection region has a defect according to the present application. Determining, by using the grayscale distribution condition of the quality inspection region, whether the quality inspection region has a defect specifically includes the following sub-steps:

In step S111, several second pixel points with grayscale values not falling within the target grayscale interval are found out from the quality inspection region.

In this embodiment, the several second pixel points with the grayscale values not falling within the target grayscale interval are found out from the quality inspection region.

For example, the target grayscale interval is a grayscale interval corresponding to the coated sub-region, and the grayscale interval of the coated sub-region has a grayscale value ranging from 40 to 60. Several second pixel points with the grayscale values not ranging from 40 to 60 are found out from the to-be-inspected image.

For another example, the target grayscale interval is a grayscale interval corresponding to the coated sub-region and a grayscale interval corresponding to the ceramic sub-region, the grayscale interval of the coated sub-region has a grayscale value ranging from 20 to 40, and the grayscale interval of the ceramic sub-region has a grayscale value ranging from 110 to 130. Several second pixel points with grayscale values not ranging from 40 to 60 and not ranging from 110 to 130 are found out from the to-be-inspected image.

In step S112, at least one suspected defective region is determined by using the several second pixel points.

In this embodiment, the at least one suspected defective region is determined by using the several second pixel points. That is to say, a region formed by the several second pixel points is used as the suspected defective region.

In step S113, in response to the suspected defective region meeting a preset size requirement, it is determined that the suspected defective region has a defect.

In this embodiment, in response to the suspected defective region meeting the preset size requirement, it is determined that the suspected defective region has a defect. That is to say, the suspected defective region is used as the defective region present in the quality inspection region only when the suspected defective region meets the preset size requirement, instead of using all the determined suspected defective regions as the defective region present in the quality inspection region, thereby improving the accuracy of quality inspection.

The preset size includes at least one of an area meeting a preset area condition and a width satisfying a preset width condition. The preset area condition and the preset width condition are not limited, and may be specifically set according to actual needs.

For example, taking the defect being that the coated sub-region has metal exposure, the target grayscale interval being the grayscale interval corresponding to the coated sub-region, the grayscale interval of the coated sub-region having the grayscale value ranging from 40 to 60, and the grayscale interval corresponding to the metal exposure having a grayscale value ranging from 170 to 255 as an example: several second pixel points with the grayscale values not ranging from 40 to 60 are found out from the quality inspection region, and several second pixel points with the grayscale values ranging from 170 to 255 are found out from the quality inspection region; a suspected defective region A and a suspected defective region B are determined by using the several second pixel points; since the suspected defective region A meets the preset size requirement and the suspected defective region B does not meet the preset size requirement, it is determined that the suspected defective region A has metal exposure and the suspected defective region B does not have metal exposure.

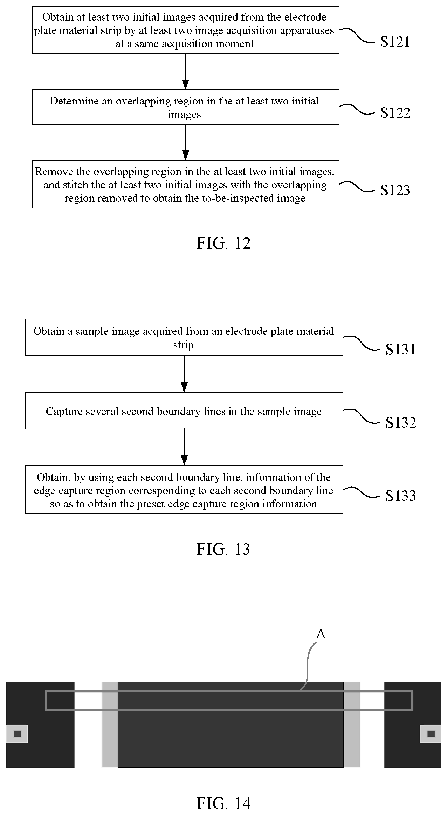

Referring to FIG. 12, FIG. 12 is a schematic flowchart of an embodiment of step S11 shown in FIG. 1. It should be noted that if substantially identical results are achieved, the embodiments of the present application are not limited to the step sequence shown in FIG. 12. As shown in FIG. 12, this embodiment includes:
In step S121, the at least two initial images of the electrode plate acquired by the at least two image acquisition apparatuses at the same acquisition moment are obtained.

In this embodiment, the at least two initial images of the electrode plate acquired by the at least two image acquisition apparatuses at the same acquisition moment are obtained, where the plurality of image acquisition apparatuses are arranged in the width direction of the electrode plate.

The number and type of the image acquisition apparatuses arranged in the width direction of the electrode plate are not limited. For example, the image acquisition apparatus is a CCD camera, and the number of the image acquisition apparatuses arranged in the width direction of the electrode plate is two.

In step S122, an overlapping region in the at least two initial images is determined.

When the at least two image acquisition apparatuses are used to obtain the to-be-inspected image corresponding to the electrode plate, the capturing fields of view of some of the image acquisition apparatuses may overlap. Therefore, in this embodiment, the overlapping region in the at least two initial images is determined.

The manner of determining the overlapping region in the at least two initial images is not limited, and may be specifically set according to actual needs.

In step S123, the overlapping region in the at least two initial images is removed, and the at least two initial images with the overlapping region removed are stitched to obtain the to-be-inspected image.

In this embodiment, the overlapping region in the at least two initial images is removed, and the at least two initial images with the overlapping region removed are stitched to obtain the to-be-inspected image. Specifically, after the overlapping region is determined, the overlapping region is removed, and image stitching is performed so as to obtain the to-be-inspected image corresponding to the electrode plate.

The manner of stitching the at least two initial images with the overlapping region removed is not limited, and may be specifically set according to actual needs.

For example, as shown in FIG. 5, an image acquisition apparatus A (an image acquisition apparatus on the left side in FIG. 5) and an image acquisition apparatus B (an image acquisition apparatus on the right side in FIG. 5) arranged in the width direction of the electrode plate are used to simultaneously acquire the image of the electrode plate to obtain an initial image a and an initial image b; an overlapping region in the initial image a and the initial image b is determined, and the overlapping region is removed from the initial image a or the initial image b; if the overlapping region is removed from the initial image a, the initial image b and the initial image a with the overlapping region removed are stitched to obtain the to-be-inspected image.

Referring to FIG. 13, FIG. 13 is a schematic flowchart of an embodiment of generating the preset edge capture region information according to the present application. It should be noted that if substantially identical results are achieved, the embodiments of the present application are not limited to the step sequence shown in FIG. 13. As shown in FIG. 13, this embodiment includes:
In step S131, a sample image acquired from an electrode plate is obtained.

In this embodiment, the sample image acquired from an electrode plate is obtained. In an embodiment, the sample image acquired from one electrode plate may be specifically obtained from local storage or cloud storage. Certainly, in other embodiments, the image acquisition apparatus may also be used to acquire an image of an electrode plate in real time to obtain the sample image, which is not limited herein.

In step S132, several second boundary lines in the sample image are captured.

In this embodiment, the several second boundary lines in the sample image are captured. In an embodiment, a boundary detection region of the sample image is determined based on region setting information input by a user or pre-stored region setting information; the several second boundary lines are captured from the boundary detection region.

For example, as shown in FIG. 14, FIG. 14 is a schematic diagram of an embodiment of the boundary detection region according to the present application. In response to the region setting information input by the user, a boundary detection region A of the sample image is determined, and the several second boundary lines are captured from the boundary detection region A.

In step S133, information of the edge capture region corresponding to each second boundary line is acquired by using each second boundary line so as to obtain the preset edge capture region information.

In this embodiment, the information of the edge capture region corresponding to each second boundary line is acquired by using each second boundary line so as to obtain the preset edge capture region information.

In an embodiment, for each second boundary line, position information of a first preset position point of the second boundary line is obtained as position information of a second preset position point in the edge capture region corresponding to the second boundary line. The first preset position point of the second boundary line is not limited, and may be specifically set according to actual needs. For example, the first preset position point of the second boundary line is a midpoint of the second boundary line, and is used as a center point in the edge capture region corresponding to the second boundary line.

In an embodiment, size information input by the user for the second boundary line is obtained as the size information of the edge capture region corresponding to the second boundary line, or the initial region corresponding to the second boundary line is displayed, and the first preset position point of the second boundary line overlaps with a second preset position point of the initial region. In response to the adjustment operation of the user on the initial region, the size of the initial region is adjusted, and the adjusted size information of the initial region is acquired as the size information of the edge capture region.

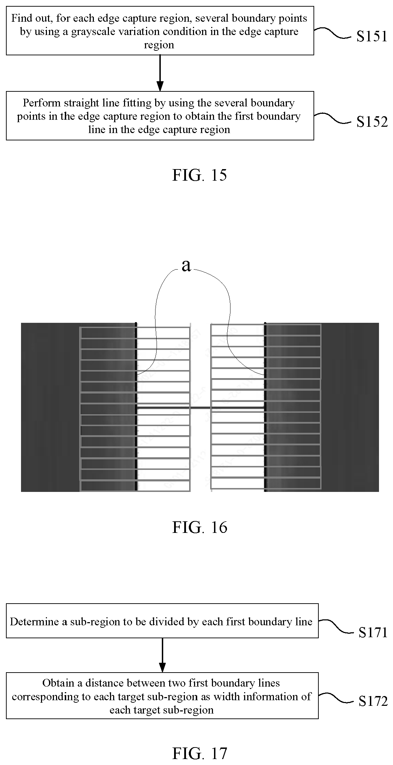

Referring to FIG. 15, FIG. 15 is a schematic flowchart of an embodiment of step S13 shown in FIG. 1. It should be noted that, if substantially identical results are achieved, this embodiment is not limited to the step sequence shown in FIG. 15. As shown in FIG. 15, in the embodiments of the present application, the first boundary line in the edge capture region is determined by using a grayscale variation condition in the edge capture region, which specifically includes:
In step S151, for each edge capture region, several boundary points are found out by using the grayscale variation condition in the edge capture region.

In this embodiment, for each edge capture region, the several boundary points are found out by using the grayscale variation condition in the edge capture region, where the grayscale variation between the boundary point and an adjacent pixel point meets a boundary grayscale variation requirement. Specifically, for each edge capture region, it is determined one by one whether a grayscale variation between each pixel point in the edge capture region and an adjacent pixel point adjacent thereto meets the boundary grayscale variation requirement. If the grayscale variation between the pixel point and the adjacent pixel point adjacent thereto meets the boundary grayscale variation requirement, it indicates that a sub-region in which the pixel point is located is different from a sub-region in which the adjacent pixel point is located, and the pixel point is determined as a boundary point of two sub-regions in the edge capture region; otherwise, the pixel point is determined as a non-boundary point.

The grayscale variation requirement is not limited and may be set according to actual needs. For example, the grayscale variation requirement is that the grayscale difference value is greater than or equal to a preset difference value, where the preset difference value is not limited and may be specifically set according to actual needs. When the grayscale difference value between the pixel point and the adjacent pixel point adjacent thereto is greater than or equal to the preset difference value, the grayscale difference between the pixel point and the pixel point adjacent thereto is significant, which indicates that the sub-region to which the pixel point belongs is different from the sub-region to which the adjacent pixel point belongs, and the pixel point is a boundary point of the two sub-regions.

In step S152, straight line fitting is performed by using the several boundary points in the edge capture region to obtain the first boundary line in the edge capture region.

In this embodiment, straight line fitting is performed by using the several boundary points in the edge capture region to obtain the first boundary line in the edge capture region. The manner of fitting the several boundary points is not limited and may be set according to actual needs.

In an embodiment, before the straight line fitting is performed by using the several boundary points in the edge capture region to obtain the first boundary line in the edge capture region, abnormal boundary points are removed from the several boundary points to improve the accuracy of the obtained first boundary line in the edge capture region.

In an embodiment, as shown in FIG. 16, FIG. 16 is a schematic diagram of an embodiment of a caliper tool according to the present application. For each edge capture region, after the several boundary points are found out by using the grayscale variation condition in the edge capture region, a cross-shaped marker is generated at the boundary point by using the caliper tool to mark the boundary point; abnormal intersection points are removed, and by using the remaining intersection points, a first boundary line a in the edge capture region is obtained by straight line fitting.

Referring to FIG. 17, FIG. 17 is a schematic flowchart of an embodiment of step S14 shown in FIG. 1. It should be noted that if substantially identical results are achieved, the embodiments of the present application are not limited to the step sequence shown in FIG. 17. As shown in FIG. 17, this embodiment includes:
In Step S171, a sub-region to be divided by each first boundary line is determined.

In this embodiment, the sub-region to be divided by each first boundary line is determined.

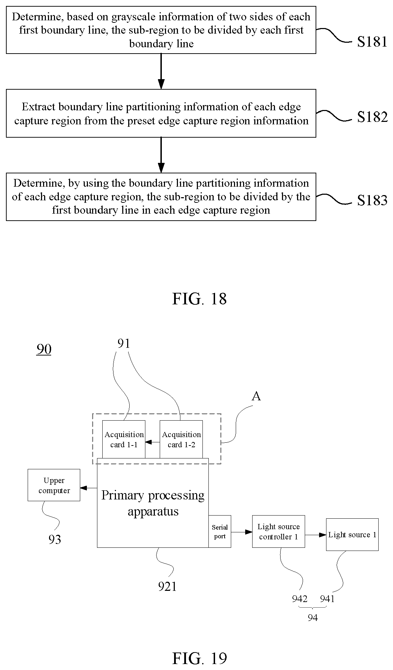

In an embodiment, as shown in FIG. 18, FIG. 18 is a schematic flowchart of an embodiment of step S171 shown in FIG. 17. The step that the sub-region to be divided by each first boundary line is determined specifically includes the following sub-steps.

In Step S181, the sub-region to be divided by each first boundary line is determined based on grayscale information of two sides of each first boundary line.

In this embodiment, the sub-region to be divided by each first boundary line is determined based on the grayscale information of the two sides of each first boundary line. Different sub-regions have different grayscale values, or in other words, different sub-regions belong to different grayscale intervals. Therefore, the types of sub-regions on the two sides of the first boundary line can be quickly determined based on the grayscale information of the two sides of each first boundary line, so as to determine the sub-region to be divided by each first boundary line.

For example, taking a grayscale interval to which a sub-region on the left of a first boundary line A belongs having a grayscale value ranging from 0 to 10, and a grayscale interval to which a sub-region on the right of the first boundary line A belongs having a grayscale value of greater than 220 as an example: since the grayscale interval to which the sub-region on the left of the first boundary line A belongs is a grayscale interval corresponding to a imaging roller sub-region, the sub-region on the left of the first boundary line A is the imaging roller sub-region; since the grayscale interval to which the sub-region on the right of the first boundary line A belongs is a grayscale interval corresponding to the uncoated sub-region, the sub-region on the right of the first boundary line A is the uncoated sub-region; therefore, it is determined that the first boundary line A is used for dividing the imaging roller sub-region and the uncoated sub-region.

In step S182, boundary line partitioning information of each edge capture region is extracted from the preset edge capture region information.

In this embodiment, the boundary line partitioning information of each edge capture region is extracted from the preset edge capture region information, where the boundary line partitioning information includes a sub-region identifier, a sub-region name, or sub-region sorting information of the sub-region to be divided by the first boundary line in the edge capture region, and the sub-region sorting information indicates sorting of the sub-region to be divided by the first boundary line in the plurality of sub-regions in the width direction of the electrode plate. The sub-region identifier, the sub-region name, or the sub-region sorting information of the sub-region to be divided by the first boundary line of the edge facilitates the subsequent determination of information about the sub-region to be divided by the first boundary line in each edge capture region.

For example, taking the boundary line partitioning information including the sub-region sorting information of the sub-region to be divided by the first boundary line in the edge capture region as an example: the first boundary line in an edge capture region A is used for dividing the uncoated sub-region and the coated sub-region, the uncoated sub-region is sorted as ① in the width direction of the electrode plate, and the coated sub-region is sorted as ② in the width direction of the electrode plate. For another example, taking the boundary line partitioning information including an identifier of the sub-region to be divided by the first boundary line of the edge capture region as an example: the first boundary line in the edge capture region A is used for dividing the uncoated sub-region and the coated sub-region, a sub-region identifier of the uncoated sub-region is a, and a sub-region identifier of the coated sub-region is b.

In step S183, the sub-region to be divided by the first boundary line in each edge capture region is determined by using the boundary line partitioning information of each edge capture region.

In this embodiment, the sub-region to be divided by the first boundary line in each edge capture region is determined by using the boundary line partitioning information of each edge capture region.

For example, if the first boundary line in the edge capture region A is used for dividing the uncoated sub-region and the coated sub-region, the uncoated sub-region is sorted as ① in the width direction of the electrode plate, and the coated sub-region is sorted as ② in the width direction of the electrode plate, then the first boundary line in the edge capture region A is used for dividing the uncoated sub-region with the sub-region sorting of ① and the coated sub-region with the sub-region sorting of ②. For another example, if the first boundary line in the edge capture region A is used for dividing the uncoated sub-region and the coated sub-region, the sub-region identifier of the uncoated sub-region is a, and the sub-region identifier of the coated sub-region is b, then the first boundary line in the edge capture region A is used for dividing the uncoated sub-region with the sub-region identifier of a and the coated sub-region with the sub-region identifier of b.

Since sub-regions of the same type are present in the electrode plate, based on the grayscale information of the two sides of the first boundary line, the sub-region to be divided by the first boundary line can be determined, but it cannot be determined whether sub-regions of the same type to be divided by other first boundary lines are the same as the sub-region to be divided by the first boundary line itself. For example, it is determined that the first boundary line A is used for dividing the imaging roller sub-region and the uncoated sub-region, and a first boundary line B is used for dividing the uncoated sub-region and the coated sub-region, but it cannot be determined whether the uncoated sub-region corresponding to the first boundary line A and the uncoated sub-region corresponding to the first boundary line B are the same coated sub-region. It should be noted that, when it is determined that the sub-regions to be divided by the two first boundary lines are the same, the two first boundary lines are boundary lines corresponding to the same sub-region. For example, it is determined that the first boundary line A is used for dividing the imaging roller sub-region and the uncoated sub-region, and the first boundary line B is used for dividing the uncoated sub-region and the coated sub-region. If the uncoated sub-region to be divided by the first boundary line A and the uncoated sub-region to be divided by the first boundary line B are the same uncoated sub-region, it is determined that the first boundary line A and the first boundary line B are two boundary lines used for dividing the uncoated sub-region.

Therefore, after the sub-region to be divided by the first boundary line in each edge capture region is determined, it can be determined whether the sub-region to be divided by the first boundary line itself is the same as the sub-regions to be divided by other first boundary lines, so that two boundary lines corresponding to the sub-region can be determined. For example, if a first boundary line α in the edge capture region A is used for dividing the uncoated sub-region with the sub-region identifier of a and the coated sub-region with the sub-region identifier of b, a first boundary line β in an edge capture region B is used for dividing the uncoated sub-region with the sub-region identifier of b and the coated sub-region with a sub-region identifier of c, so the first boundary line α and the first boundary line β are two boundary lines corresponding to the sub-region with the sub-region identifier of b.

In step S172, the distance between two first boundary lines corresponding to each target sub-region is obtained and used as width information of each target sub-region.

In this embodiment, the distance between the two first boundary lines corresponding to each target sub-region is obtained and used as the width information of each target sub-region. The target sub-region is formed between the two boundary lines corresponding to the target sub-region. Therefore, the distance between the two first boundary lines corresponding to the target sub-region is the width of the target sub-region.

The target sub-region is any sub-region on the electrode plate, or is formed by stitching a plurality of continuously adjacent sub-regions. For example, the target sub-region is the uncoated sub-region on the left side of the electrode plate, so the distance between two first boundary lines corresponding to the uncoated sub-region on the left side is used as the width of the uncoated sub-region on the left side. For another example, the target sub-region is formed by stitching the uncoated sub-region on the left side and an adjacent coated sub-region. Therefore, the distance between two first boundary lines corresponding to the target sub-region is used as the sum of the width of the uncoated sub-region on the left side and the width of the adjacent coated sub-region.

Referring to FIG. 6 and FIG. 19, FIG. 19 is a schematic diagram of an electrical topology structure of an embodiment of a visual inspection system according to the present application. The present application provides a visual inspection system 90. The visual inspection system 90 includes at least one image acquisition apparatus 91, a processing apparatus 92, and an upper computer 93. The at least one image acquisition apparatus 91 is configured to acquire an image of an electrode plate; the processing apparatus 92 is in communication connection with the at least one image acquisition apparatus 91, and is configured to inspect the electrode plate by using the image acquired by the at least one image acquisition apparatus 91 to obtain an inspection result of the electrode plate, where the inspection result includes width information related to the electrode plate, and the width information is determined by using a first boundary line detected in at least one edge capture region of the image; the upper computer 93 is in communication connection with the processing apparatus 92, and is configured to display the image acquired by the image acquisition apparatus 91, and/or prompt the inspection result.

The processing apparatus 92 can be configured to inspect the electrode plate by using the image acquired by the at least one image acquisition apparatus 91; that is, the processing apparatus 92 of the visual inspection system 90 can implement automatic inspection of the electrode plate, the inspection result includes the width information related to the electrode plate, and the width information is determined by using the first boundary line detected in the at least one edge capture region of the image. The at least one edge capture region is determined in the to-be-inspected image based on preset edge capture region information, boundary detection is performed on each edge capture region to obtain the first boundary line in each edge capture region, and the width information related to the electrode plate is determined by using the first boundary line in each edge capture region. Therefore, automatic inspection of the electrode plate can be achieved. Further, in the above solution, the width information related to the electrode plate can also be determined by using the preset edge capture region, so as to automatically detect the width information related to the electrode plate. In addition, the preset edge capture region does not need to be set by a user, thereby improving the efficiency of detecting the width information related to the electrode plate.

Further, the visual inspection system 90 is further provided with the upper computer 93, and the upper computer 93 can be configured to display the image acquired by the image acquisition apparatus 91, so that relevant personnel can know the coating condition of the electrode plate in a timely manner; alternatively, the upper computer 93 can be configured to prompt the inspection result, so that relevant personnel can know the inspection status of the electrode plate in a timely manner, and then when it is known that the electrode plate is detected to be abnormal, corresponding processing can be performed in a timely manner to prevent batch scrapping caused by coating. Therefore, the visual inspection system 90 provided by the present application integrates the electrode plate inspection function and the related information display function into a whole, which can not only realize automatic inspection of the electrode plate, but also realize image display and/or inspection result prompt.

In an embodiment, at least one upper computer 93 is included, and the at least one upper computer 93 is at a preset position of a coating system configured to coat the electrode plate. The number and the preset position of the upper computer 93 are not limited, and may be specifically set according to actual needs. For example, the number of the upper computer 93 is 1, 2, 5, 10, or the like, and the preset position is the machine head or the machine tail of the coating system.

In a specific embodiment, as shown in FIG. 6, two upper computers 93 are disposed. One upper computer 93 is disposed at the machine head of the coating system, and the other upper computer 93 is disposed at the machine tail of the coating system. Since the relevant personnel generally perform relevant operations at the machine head and/or the machine tail of the coating system, the machine head and the machine tail of the coating system are each provided with one upper computer 93, so that the relevant personnel at the machine head and the machine tail can know the coating condition and other relevant conditions of the electrode plate, and/or the inspection status of the electrode plate in a timely manner, and then the relevant personnel at the machine head and the machine tail can carry out corresponding processing in a timely manner when knowing that the electrode plate is detected to be abnormal, thereby preventing batch scrapping caused by coating.

In other embodiments, the upper computer 93 further includes a mouse, a keyboard, a KVM network receiver, and the like, which are not limited herein.

In an embodiment, the at least one image acquisition apparatus 91 includes at least one apparatus group, each apparatus group includes at least one image acquisition apparatus 91, and different apparatus groups are respectively configured to acquire different surfaces of the electrode plate. That is to say, when both the front and back surfaces of the electrode plate need to be acquired, different apparatus groups are used to acquire images of the front and back surfaces of the electrode plate, respectively. The number of the apparatus groups and the number of the image acquisition apparatuses 91 included in each apparatus group are not limited, and may be specifically set according to actual needs. For example, the number of the apparatus groups is two, and each apparatus group includes one image acquisition apparatus 91; for another example, the number of the apparatus groups is two, and each apparatus group includes two image acquisition apparatuses 91; for another example, the number of the apparatus group is one, and the apparatus group includes an image acquisition apparatus 1-1 and an image acquisition apparatus 1-2.

For example, as shown in FIG. 6, taking the number of the apparatus groups being two and each apparatus group including one image acquisition apparatus 91 as an example: an apparatus group A and an apparatus group B are included, the apparatus group A includes one image acquisition apparatus 91 (an image acquisition apparatus located on the upper portion in FIG. 6), and the apparatus group B includes one image acquisition apparatus 91 (an image acquisition apparatus located on the lower portion in FIG. 6); after the electrode plate is output from the upper-layer oven 65, the electrode plate passes through the image acquisition apparatuses 91 in the apparatus group A and the apparatus group B, and the image acquisition apparatuses 91 included in the apparatus group A and the apparatus group B are located on two sides of the electrode plate, so the image acquisition apparatus 91 of the apparatus group A acquires an image of one coating surface of the electrode plate, and the image acquisition apparatus 91 of the apparatus group B acquires an image of the other coating surface of the electrode plate.

For another example, taking the number of the apparatus groups being two, and each apparatus group including two image acquisition apparatuses as an example: an apparatus group A and an apparatus group B are included, and the apparatus group A and the apparatus group B each include two image acquisition apparatuses; after the electrode plate is output from the upper-layer oven, the electrode plate passes through the two image acquisition apparatuses in the apparatus group A and the apparatus group B; the two image acquisition apparatuses in the apparatus group A simultaneously acquire an image of one coating surface of the electrode plate; meanwhile, the two image acquisition apparatuses of the apparatus group B acquire an image of the other coating surface of the electrode plate. It should be noted that when the two image acquisition apparatuses simultaneously acquire the image of one coating surface of the electrode plate, the capturing fields of view of the two image acquisition apparatuses may overlap, so the images acquired by the two image acquisition apparatuses may have an overlapping region. Therefore, if the images acquired by the two image acquisition apparatuses are to be used as the to-be-inspected images acquired from the electrode plate, the two images acquired by the two image acquisition apparatuses need to be stitched after the overlapping region is removed. In addition, the two image acquisition apparatuses are used to acquire the image of the same coating surface, which widens the range of the field of view and can be applied to image acquisition of wide-width electrode plates.

In an embodiment, the at least one apparatus group includes a first apparatus group and a second apparatus group, and the processing apparatus includes a primary processing apparatus 921 and a secondary processing apparatus 922. The primary processing apparatus 921 is connected to the first apparatus group, and is configured to inspect an image acquired by the first apparatus group; the secondary processing apparatus 922 is connected to the second apparatus group, and is configured to inspect an image acquired by the second apparatus group to obtain a second inspection result, and send at least one of the image acquired by the second apparatus group and the second inspection result to the primary processing apparatus 921; the primary processing apparatus 921 is connected to the upper computer, and is further configured to send the images acquired by the first apparatus group and the second apparatus group to the upper computer, and/or prompt the first inspection result and the second inspection result. That is to say, when the visual inspection system includes two apparatus groups, one processing apparatus cannot support the normal operation of the two apparatus groups at the same time, so the primary and secondary processing apparatuses 921 are disposed, and the primary and secondary processing apparatuses 921 are respectively connected to one apparatus group to ensure the normal operation thereof.

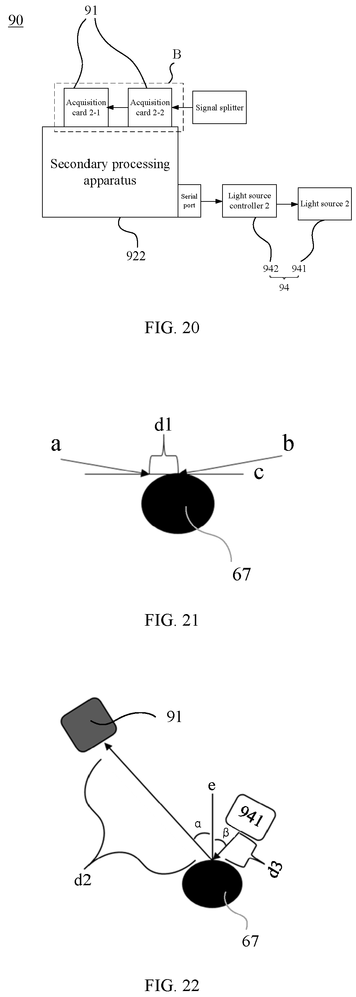

For example, as shown in FIGs. 19 and 20, FIG. 20 is a schematic diagram of an electrical topology structure of another embodiment of the visual inspection system according to the present application. A first apparatus group A includes two image acquisition apparatuses (an acquisition card 1-1 and an acquisition card 1-2 in FIG. 19), the two image acquisition apparatuses (the acquisition card 1-1 and the acquisition card 1-2 in FIG. 19) included in the first apparatus group A are connected to the primary processing apparatus 921, and the primary processing apparatus 921 can inspect images acquired by the two image acquisition apparatuses included in the first apparatus group A. A second apparatus group B includes two image acquisition apparatuses (an acquisition card 2-1 and an acquisition card 2-2 in FIG. 20), the two image acquisition apparatuses (the acquisition card 2-1 and the acquisition card 2-2 in FIG. 20) included in the second apparatus group B are connected to the secondary processing apparatus 922, and the secondary processing apparatus 922 can inspect images acquired by the two image acquisition apparatuses (the acquisition card 2-1 and the acquisition card 2-2 in FIG. 20) included in the second apparatus group B. In one aspect, the upper computer 93 receives the images acquired by the first apparatus group A and the second apparatus group B and sent by the primary processing apparatus 921, so that relevant personnel can know the coating condition and other related conditions of the electrode plate in a timely manner, and in another aspect, the upper computer can prompt the first inspection result and the second inspection result, so that relevant personnel can know the inspection status of the electrode plate in a timely manner.

In a specific embodiment, the image acquisition apparatus 91 is a first-type acquisition apparatus, the visual inspection system 90 further includes two light source modules 94, each light source module 94 includes a light source 941 and a light source controller 942 connected to each other, and the light source controllers 942 of the two light source modules 94 are respectively connected to the primary processing apparatus 921 and the secondary processing apparatus 922, so that the correspondingly connected processing apparatus 92 instructs the light source controller 942 to control the operation of the corresponding light source 941. Specifically, the primary processing apparatus 921 corresponds to a light source module 94 (as shown in FIG. 19, the primary processing apparatus 921 corresponds to a light source 1 and a light source controller 1), and the secondary processing apparatus 922 corresponds to a light source module 94 (as shown in FIG. 20, the secondary processing apparatus 922 corresponds to a light source 2 and a light source controller 2). For the primary processing apparatus 921, the light source controller 942 of the corresponding light source module 94 is connected to the primary processing apparatus 921, and the light source 941 of the corresponding light source module 94 is connected to the corresponding light source controller 942. For the secondary processing apparatus 922, the light source controller 942 of the corresponding light source module 94 is connected to the secondary processing apparatus 922, and the light source 941 of the corresponding light source module 94 is connected to the corresponding light source controller 942.

In a specific embodiment, the primary processing apparatus and the secondary processing apparatus are connected through a network. Certainly, in other specific embodiments, the primary processing apparatus and the secondary processing apparatus may also be connected through a physical connection line, which is not limited herein.

In an embodiment, the image acquisition apparatus 91 is a first-type acquisition apparatus, and the visual inspection system 90 further includes a light source 941 configured to provide capturing light for the first-type acquisition apparatus. The light source 941 and the first-type acquisition apparatus are respectively located on two sides of a target normal, and the target normal is a normal of a tangent between an electrode plate and a roller for conveying the electrode plate, where a first distance is formed between a target tangent point and an intersection point between an optical axis of the first-type acquisition apparatus and an acquisition surface, the acquisition surface is a surface, facing the first-type acquisition apparatus, of the electrode plate, the target tangent point is a tangent point between the electrode plate and the roller for conveying the electrode plate, and the first distance enables an incident amount of light reflected by the roller from the light source 941 and incident on the first-type acquisition apparatus to be less than a preset threshold.

Specifically, as shown in FIG. 21, FIG. 21 is a schematic diagram of an embodiment of a capturing point of the image acquisition apparatus according to the present application. A first distance d between an intersection point a (between the optical axis of the first-type acquisition apparatus and an acquisition surface c) and a tangent point b (between the electrode plate and the roller 67) enables the incident amount of the light reflected by the roller from the light source 941 and incident on the first-type acquisition apparatus to be less than the preset threshold, thereby improving the quality of the acquired image of the electrode plate. The value of the preset threshold is not limited.

In an embodiment, as shown in FIG. 22, FIG. 22 is a schematic diagram of erection of an embodiment of the image acquisition apparatus according to the present application. The image acquisition apparatus 91 is a first-type acquisition apparatus, and the visual inspection system 90 further includes a light source 941 configured to provide capturing light for the first-type acquisition apparatus. The light source 941 and the first-type acquisition apparatus are respectively located on two sides of a target normal e, and the target normal e is a normal of a tangent between the electrode plate and the roller 67 for conveying the electrode plate, where a second distance d2 between the first-type acquisition apparatus and the acquisition surface c is related to a focal length of the first-type acquisition apparatus. Specifically, the second distance d2 between the first-type acquisition apparatus and the acquisition surface c/focal length = range of the field of view/target surface size, where the target surface size is equivalent to the sensor length of the image acquisition apparatus 91.

In an embodiment, the image acquisition apparatus 91 is a first-type acquisition apparatus, and the visual inspection system 90 further includes a light source 941 configured to provide capturing light for the first-type acquisition apparatus. The light source 941 and the first-type acquisition apparatus are respectively located on two sides of a target normal e, and the target normal e is a normal of a tangent between the electrode plate and the roller 67 for conveying the electrode plate. As shown in FIG. 22, a first included angle α is formed between illumination light of the light source 941 and the target normal e, a second included angle β is formed between the optical axis of the first-type acquisition apparatus and the target normal e, and at least one of the first included angle α and the second included angle β has a value sufficient to enable an illumination intensity in a capturing region of the first-type acquisition apparatus to meet requirements. The illumination intensity that meets the requirement is not limited, and may be specifically set according to actual needs.

In an embodiment, the image acquisition apparatus 91 is a first-type acquisition apparatus, and the visual inspection system 90 further includes a light source 941 configured to provide capturing light for the first-type acquisition apparatus. The light source 941 and the first-type acquisition apparatus are respectively located on two sides of a target normal e, and the target normal e is a normal of a tangent between the electrode plate and the roller 67 for conveying the electrode plate, where a third distance is formed between the light source 941 and the acquisition surface, and when a third distance d3 is formed between the light source 941 and the acquisition surface c, the illumination intensity in a capturing region of the first-type acquisition apparatus is higher, so that an image subsequently acquired by the image acquisition apparatus 91 is clearer and of higher quality.

In an embodiment, the image acquisition apparatus 91 is a second-type acquisition apparatus, the second-type acquisition apparatus is connected to a plurality of acquisition cards corresponding to the second-type acquisition apparatus, and the plurality of acquisition cards corresponding to the second-type acquisition apparatus are connected to the processing apparatus 92, where the plurality of acquisition cards corresponding to the second-type acquisition apparatus are connected to each other through an inter-board synchronization cable, and an encoder of the visual inspection system 90 transmits an acquisition trigger signal to one of the acquisition cards, where the one of acquisition cards and the remaining acquisition cards corresponding to the second-type acquisition apparatus are synchronized through the inter-board synchronization cable to trigger the second-type acquisition apparatus for image acquisition.

In an embodiment, the visual inspection system 90 further includes a signal distributor connected to the encoder, and the acquisition trigger signal from the encoder outputs a plurality of channels of acquisition trigger signals through the signal distributor to be respectively transmitted to all the acquisition cards, so as to trigger the second-type acquisition apparatus for image acquisition. That is to say, the encoder of the visual inspection system 90 generates a pulse signal when rotating, and after one acquisition card receives the pulse signal, the remaining acquisition cards are synchronized through the inter-board synchronization cable, which triggers the second-type acquisition apparatus for image acquisition.

In an embodiment, the encoder of the visual inspection system 90 generates a pulse signal when rotating, the pulse signal is divided into a plurality of channels of signals after passing through the signal distributor, and after each acquisition card receives the pulse signal, the second-type acquisition apparatus is triggered in multiple channels to perform image acquisition.

In an embodiment, the second-type acquisition apparatus is a macro camera. The macro camera uses an integrated design of a sensor, a lens, and a light source, thereby achieving convenient and fast mounting and saving space. The camera equipped with a line sensor can capture a high-resolution image in a wide range at a high speed. Certainly, in other embodiments, the second-type acquisition apparatus may alternatively be an acquisition apparatus in another type, which is not limited herein.

In an embodiment, the inter-board synchronization cable is a Cameralink data line. Certainly, in other embodiments, the inter-board synchronization cable may alternatively be a data line in another type, which is not limited herein.

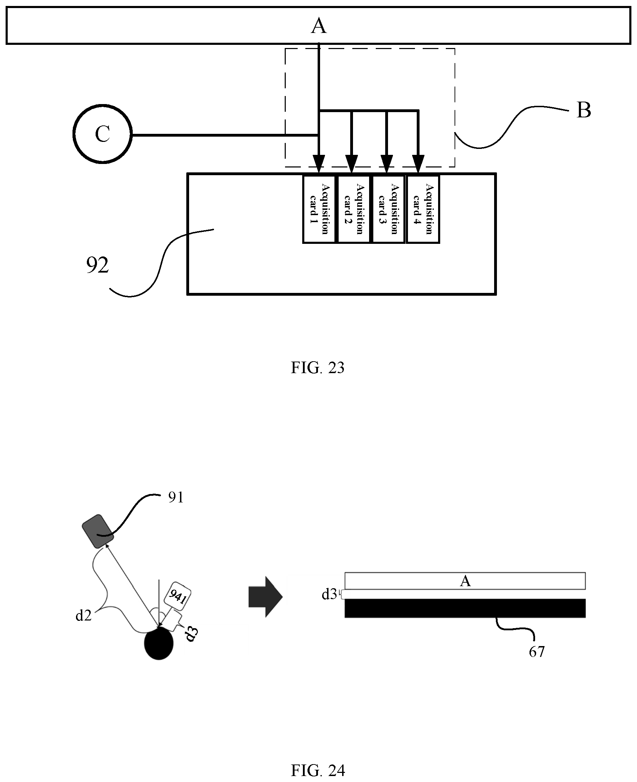

For example, as shown in FIG. 23, FIG. 23 is a schematic diagram of an embodiment of electrical wiring of a macro camera according to the present application. Taking the second-type acquisition apparatus being a macro camera as an example: four acquisition cards (an acquisition card 1, an acquisition card 2, an acquisition card 3, and an acquisition card 4) corresponding to a macro camera A are connected through a Cameralink data line B, the macro camera A is connected to the four acquisition cards corresponding to the macro camera A, and the four acquisition cards are connected to the processing apparatus 92; an encoder C of the visual inspection system 90 transmits the acquisition trigger signal to the acquisition card 4, and the acquisition card 4 is synchronized with the acquisition card 1, the acquisition card 2, and the acquisition card 3 through the Cameralink data line B to trigger the macro camera A for image acquisition; alternatively, the acquisition trigger signal from the encoder C of the visual inspection system 90 outputs four channels of the acquisition trigger signal through the signal distributor to be respectively transmitted to the acquisition card 1, the acquisition card 2, the acquisition card 3, and the acquisition card 4, so as to trigger the macro camera A for image acquisition.

In an embodiment, a third distance d3 is formed between the second-type acquisition apparatus and the acquisition surface c, and the acquisition surface c is a surface, facing the first-type acquisition apparatus, of the electrode plate. That is to say, by using the second-type acquisition apparatus to acquire the image, the third distance d3 between the second-type acquisition apparatus and the acquisition surface can be reduced, thereby saving space.

In a specific embodiment, the visual inspection system 90 further includes a manufacturing execution system (MES), a programmable logic controller (PLC), an 8-port switch, a tri-color light, a PLC of a CCD, a camera fan, a cabinet fan, a 5-port switch, a card reader, and a KVM transmitter. The PLC is connected to a network port 2 of the primary processing apparatus through the 8-port switch. The camera fan, the cabinet fan, and the tri-color light are connected to the PLC of the CCD, and the PLC of the CCD is connected to the network port 2 of the primary processing apparatus through the 8-port switch. The camera fan is configured to dissipate heat for a camera, and the number of the camera fan may be 1, 2, 3, etc.; the cabinet fan is configured to dissipate heat for a camera cabinet, and the number of the cabinet fan may be 1, 2, 3, or more; and the tri-color light is configured to flash or the like when the electrode plate is abnormal, so as to notify relevant personnel of the abnormal condition of the electrode plate in a timely manner. The secondary processing apparatus is connected to the network port 2 of the primary processing apparatus through the 8-port switch. The light source module corresponding to the primary processing apparatus is connected to a network port 1 of the primary processing apparatus through the light source controller 1 thereof. The MES is connected to the network port 1 of the primary processing apparatus. A monitoring device 193 is connected to the 5-port switch, and the 5-port switch is connected to a VGA port of the primary processing apparatus through the KVM transmitter. The card reader is connected to a USB port of the primary processing apparatus.

In a specific embodiment, as shown in FIG. 20, the light source module corresponding to the secondary processing apparatus 921 is controlled, through the light source thereof, to be connected to a serial port of the secondary processing apparatus 922. The 8-port switch is connected to the network port 1 of the secondary processing apparatus 922.

Referring to FIG. 6 again, the present application further provides a coating system 60. The coating system 60 includes an unwinding mechanism 61, a first coating mechanism (a die head A62 in FIG. 6), a drying mechanism (a lower-layer oven 63 and an upper-layer oven 65 in FIG. 6), a second coating mechanism (a die head B64 in FIG. 6), a rewinding mechanism 66, and a visual inspection system 90. The visual inspection system 90 is configured to obtain coating images acquired from two opposite coating surfaces of an electrode plate; determine coating misalignment information by using the coating images, where the coating misalignment information characterizes the misalignment condition of coated regions on the coating surfaces; and perform, based on the coating misalignment information, deviation correction on at least two of coating mechanisms of the two coating surfaces and the electrode plate, so that the coated regions of the two coating surfaces after the deviation correction are aligned and both located at standard coating positions on the coating surfaces. The unwinding mechanism 61 is used to unwind the electrode plate; the first coating mechanism (the die head A62 in FIG. 6) is configured to coat a first coating surface of the unwound electrode plate; the second coating mechanism (the die head B64 in FIG. 6) is disposed behind the first coating mechanism the second coating mechanism (the die head B62 in FIG. 6) and is configured to coat a second coating surface of the electrode plate; the drying mechanism (the lower-layer oven 63 and the upper-layer oven 65 in FIG. 6) 43 is configured to dry the electrode plate after being coated by the first coating mechanism (the die head A62 in FIG. 6) and the second coating mechanism (the die head B64 in FIG. 6); the rewinding mechanism 66 is used to rewind the dried electrode plate.

In an embodiment, the visual inspection system 90 further includes a first image acquisition apparatus and a second image acquisition apparatus. The first image acquisition apparatus and the second image acquisition apparatus are disposed behind the second coating mechanism, the first image acquisition apparatus is disposed on one side of the first coating surface, and the second image acquisition apparatus is disposed on one side of the second coating surface.

In an embodiment, the coating system 60 or the visual inspection system 90 further includes a deviation correcting mechanism 69 (95), and the deviation correcting mechanism 69 (95) is configured to perform deviation correction on the coating mechanism of the coating surface of the electrode plate.

If the technical solutions of the present application relate to personal information, before the product applying the technical solutions of the present application processes the personal information, individuals have been clearly informed of the personal information processing rules, and their voluntary consent has been obtained. If the technical solutions of the present application relate to sensitive personal information, before the product applying the technical solutions of the present application processes the sensitive personal information, separate consent has been obtained from the individuals, and at the same time, the requirements of "explicit consent" have been met. For example, at a personal information collection apparatus such as a camera, a clear and conspicuous identifier is provided to inform individuals that they have entered the scope of personal information collection and that the personal information will be collected. If individuals voluntarily enter the collection scope, they shall be deemed to have consented to the collection of their personal information. Alternatively, on a personal information processing apparatus, in the case that individuals have been informed of the personal information processing rules by using a conspicuous identifier/information, individual authorization is obtained by means of a pop-up message, by voluntarily uploading personal information by the individuals, or by other means. The personal information processing rules may include information such as personal information processors, purposes of personal information processing, processing methods, and types of personal information processed.

The above descriptions are merely embodiments of the present application and do not thereby limit the patent scope of the present application. Any equivalent structures or equivalent process changes made based on the content of the specification and drawings of the present application, or any direct or indirect application in other related technical fields, shall likewise be included within the scope of patent protection of the present application.

## Claims

1. An electrode plate inspection method, comprising:
obtaining a to-be-inspected image acquired from an electrode plate;
determining at least one edge capture region in the to-be-inspected image based on preset edge capture region information, wherein the preset edge capture region information comprises position information and/or size information of the edge capture region;
performing boundary detection on each edge capture region to obtain a first boundary line in each edge capture region, wherein the first boundary line is used for dividing different sub-regions of the electrode plate arranged in a width direction; and
determining, by using the first boundary line in each edge capture region, width information related to the electrode plate.

2. The method according to claim 1, wherein determining the at least one edge capture region in the to-be-inspected image based on the preset edge capture region information comprises:
determining at least four edge capture regions in the to-be-inspected image based on the preset edge capture region information in a case that the electrode plate is an anode electrode plate, or determining at least six edge capture regions in the to-be-inspected image based on the preset edge capture region information in a case that the electrode plate is a cathode electrode plate.

3. The method according to claim 2, wherein the boundary detection of all the edge capture regions is performed by multiple threads, and the boundary detection of each edge capture region is performed by using one of the threads.

4. The method according to any one of claims 1 to 3, wherein before determining the at least one edge capture region in the to-be-inspected image based on the preset edge capture region information, the method further comprises:
obtaining a sample image acquired from an electrode plate;
capturing several second boundary lines in the sample image; and
acquiring, by using each second boundary line, information of the edge capture region corresponding to each second boundary line so as to obtain the preset edge capture region information.

5. The method according to claim 4, wherein capturing the several second boundary lines in the sample image comprises:
determining a boundary detection region of the sample image based on region setting information; and
capturing the several second boundary lines from the boundary detection region;
and/or, acquiring, by using each second boundary line, the information of the edge capture region corresponding to each second boundary line so as to obtain the preset edge capture region information comprises at least one of the following steps:
obtaining, for each second boundary line, position information of a first preset position point of the second boundary line as position information of a second preset position point in the edge capture region corresponding to the second boundary line; and
obtaining size information of the edge capture region corresponding to the second boundary line.

6. The method according to any one of claims 1 to 5, wherein performing boundary detection on each edge capture region to obtain the first boundary line in each edge capture region comprises:
finding out, for each edge capture region, several boundary points by using a grayscale variation condition in the edge capture region, wherein a grayscale variation between the boundary point and an adjacent pixel point meets a boundary grayscale variation requirement; and
performing straight line fitting by using the several boundary points in the edge capture region to obtain the first boundary line in the edge capture region.

7. The method according to any one of claims 1 to 6, wherein determining, by using the first boundary line in each edge capture region, the width information related to the electrode plate comprises:
determining a sub-region to be divided by each first boundary line; and
obtaining a distance between two first boundary lines corresponding to each target sub-region as width information of each target sub-region, wherein the target sub-region is any sub-region on the electrode plate, or is formed by stitching a plurality of continuously adjacent sub-regions.

8. The method according to claim 7, wherein determining the sub-region to be divided by each first boundary line comprises:
determining, based on grayscale information of two sides of each first boundary line, the sub-region to be divided by each first boundary line;
extracting boundary line partitioning information of each edge capture region from the preset edge capture region information, wherein the boundary line partitioning information comprises a sub-region identifier, a sub-region name, or sub-region sorting information of the sub-region to be divided by the first boundary line in the edge capture region, and the sub-region sorting information indicates sorting of the sub-region to be divided by the first boundary line in a plurality of sub-regions in the width direction of the electrode plate; and determining, by using the boundary line partitioning information of each edge capture region, the sub-region to be divided by the first boundary line in each edge capture region.

9. The method according to any one of claims 1 to 8, wherein the width information comprises coating-related width information capable of characterizing positions and/or widths of coated regions of two coating surfaces of the electrode plate; after determining, by using the first boundary line in each edge capture region, the width information related to the electrode plate, the method further comprises:
determining coating misalignment information by using the coating-related width information, wherein the coating misalignment information characterizes a misalignment condition of the coated region; and
performing, based on the coating misalignment information, deviation correction on at least one of coating mechanisms of the two coating surfaces and the electrode plate by using a deviation correcting mechanism, so that the coated regions of the two coating surfaces after the deviation correction are aligned and/or both located at standard coating positions on the coating surfaces.

10. The method according to any one of claims 1 to 9, wherein the method further comprises:
determining a quality inspection region in the to-be-inspected image, wherein the quality inspection region comprises one or a plurality of sub-regions in the width direction of the electrode plate; and
performing quality inspection on the quality inspection region to obtain a quality inspection result of the quality inspection region.

11. The method according to claim 10, wherein grayscale values of all types of sub-regions of the electrode plate in the acquired image respectively belong to different grayscale intervals; determining the quality inspection region in the to-be-inspected image comprises:
finding out, from the to-be-inspected image, a first pixel point with a grayscale value falling within a target grayscale interval; and
obtaining a connected domain formed by the first pixel point as the quality inspection region;
and/or, performing quality inspection on the quality inspection region to obtain the quality inspection result of the quality inspection region comprises:
determining, by using a grayscale distribution condition in the quality inspection region, whether the quality inspection region has a defect.

12. The method according to claim 11, wherein the quality inspection region comprises a ceramic sub-region and a coated sub-region, and the defect comprises metal exposure in the ceramic sub-region or the coated sub-region; and/or
determining, by using the grayscale distribution condition in the quality inspection region, whether the quality inspection region has a defect comprises:
finding out, from the quality inspection region, several second pixel points with grayscale values not falling within a target grayscale interval;
determining at least one suspected defective region by using the several second pixel points; and
determining, in response to the suspected defective region meeting a preset size requirement, that the suspected defective region has the defect, wherein the preset size requirement comprises at least one of an area meeting a preset area condition and a width meeting a preset width condition.

13. The method according to any one of claims 1 to 12, wherein obtaining the to-be-inspected image acquired from the electrode plate comprises:
obtaining at least two initial images acquired from the electrode plate by at least two image acquisition apparatuses at a same acquisition moment, wherein the plurality of image acquisition apparatuses are arranged in the width direction of the electrode plate;
determining an overlapping region in the at least two initial images; and
removing the overlapping region of the at least two initial images, and stitching the at least two initial images with the overlapping region removed to obtain the to-be-inspected image;
and/or, before determining the at least one edge capture region in the to-be-inspected image based on the preset edge capture region information, the method further comprises:
discarding the to-be-inspected image in response to the to-be-inspected image being an abnormal image;
and/or, the to-be-inspected image is obtained by stitching the at least two initial images acquired by the at least two image acquisition apparatuses at the same acquisition moment, and before acquiring the to-be-inspected image acquired from the electrode plate, the method further comprises:
discarding the at least two initial images in response to the at least two initial images being abnormal.

14. A visual inspection system, comprising:
at least one image acquisition apparatus, configured to acquire an image of an electrode plate;
a processing apparatus, in communication connection with the at least one image acquisition apparatus, and configured to inspect the electrode plate by using the image acquired by the at least one image acquisition apparatus to obtain an inspection result of the electrode plate, wherein the inspection result comprises width information related to the electrode plate, and the width information is determined by using a first boundary line detected in at least one edge capture region of the image; and
an upper computer, in communication connection with the processing apparatus, and configured to display the image acquired by the image acquisition apparatus, and/or prompt the inspection result.

15. The system according to claim 14, wherein the image acquisition apparatus is a first-type acquisition apparatus, the system further comprises a light source configured to provide capturing light for the first-type acquisition apparatus, the light source and the first-type acquisition apparatus are respectively located on two sides of a target normal, and the target normal is a normal of a tangent between the electrode plate and a roller for conveying the electrode plate, wherein
a first distance is formed between a target tangent point and an intersection point between an optical axis of the first-type acquisition apparatus and an acquisition surface, the acquisition surface is a surface, facing the first-type acquisition apparatus, of the electrode plate, the target tangent point is a tangent point between the electrode plate and the roller for conveying the electrode plate, and the first distance enables an incident amount of light reflected by the roller from the light source and incident on the first-type acquisition apparatus to be less than a preset threshold; and/or
a second distance between the first-type acquisition apparatus and the acquisition surface is related to a focal length of the first-type acquisition apparatus; and/or
a first included angle is formed between illumination light of the light source and the target normal, a second included angle is formed between the optical axis of the first-type acquisition apparatus and the target normal, and at least one of the first included angle and the second included angle has a value sufficient to enable an illumination intensity in a capturing region of the first-type acquisition apparatus to meet requirements; and/or
a third distance is formed between the light source and the acquisition surface.

16. The system according to claim 14, wherein the image acquisition apparatus is a second-type acquisition apparatus, the second-type acquisition apparatus is connected to a plurality of acquisition cards corresponding to the second-type acquisition apparatus, and the plurality of acquisition cards corresponding to the second-type acquisition apparatus are connected to the processing apparatus,
wherein the plurality of acquisition cards corresponding to the second-type acquisition apparatus are connected to each other through an inter-board synchronization cable, and an encoder of the system transmits an acquisition trigger signal to one of the acquisition cards, the one of the acquisition cards and the remaining acquisition cards corresponding to the second-type acquisition apparatus are synchronized through the inter-board synchronization cable to trigger the second-type acquisition apparatus for image acquisition.

17. The system according to claim 14, wherein the image acquisition apparatus is a second-type acquisition apparatus, the second-type acquisition apparatus is connected to a plurality of acquisition cards corresponding to the second-type acquisition apparatus, and the plurality of acquisition cards corresponding to the second-type acquisition apparatus are connected to the processing apparatus,
wherein the system further comprises a signal distributor connected to the encoder, and an acquisition trigger signal from the encoder outputs a plurality of channels of acquisition trigger signals through the signal distributor to be respectively transmitted to all the acquisition cards, so as to trigger the second-type acquisition apparatus for image acquisition.

18. The system according to claim 17, wherein the second-type acquisition apparatus is a macro camera;
and/or, a third distance is formed between the second-type acquisition apparatus and the acquisition surface, and the acquisition surface is a surface, facing the first-type acquisition apparatus, of the electrode plate.

19. The system according to any one of claims 14 to 18, wherein the at least one image acquisition apparatus comprises at least one apparatus group, each apparatus group comprises at least one image acquisition apparatus, and the different apparatus groups are respectively configured to acquire different surfaces of the electrode plate.

20. The system according to claim 19, wherein the at least one apparatus group comprises a first apparatus group and a second apparatus group, and the processing apparatus comprises a primary processing apparatus and a secondary processing apparatus;
the primary processing apparatus is connected to the first apparatus group, and is configured to inspect an image acquired by the first apparatus group to obtain a first inspection result; the secondary processing apparatus is connected to the second apparatus group, and is configured to inspect an image acquired by the second apparatus group to obtain a second inspection result, and send at least one of the image acquired by the second apparatus group and the second inspection result to the primary processing apparatus; the primary processing apparatus is connected to the monitoring device, and is further configured to send the images acquired by the first apparatus group and the second apparatus group to the monitoring device, and/or prompt the first inspection result and the second inspection result.

21. The system according to claim 20, wherein the image acquisition apparatus is a first-type acquisition apparatus, the system further comprises two light source modules, each light source module comprises a light source and a light source controller connected to each other, and the light source controllers of the two light source modules are connected to the primary processing apparatus and the secondary processing apparatus, respectively, so that the correspondingly connected processing apparatus instructs the light source controller to control an operation of the corresponding light source;
and/or, the primary processing apparatus and the secondary processing apparatus are connected through a network.

22. The system according to any one of claims 14 to 21, wherein at least one upper computer is comprised, and the at least one upper computer is disposed at a preset position of a coating system configured to coat the electrode plate.

23. A coating system, wherein the coating system comprises:
an unwinding mechanism, configured to unwind an electrode plate material strip;
a first coating mechanism, configured to coat a first coating surface of the unwound electrode plate material strip;
a second coating mechanism, disposed behind the first coating mechanism and configured to coat a second coating surface of the electrode plate material strip;
a drying mechanism, configured to dry the electrode plate material strip after being coated by the first coating mechanism and the second coating mechanism;
a rewinding mechanism, configured to rewind the dried electrode plate material strip; and
a visual inspection system, wherein the visual inspection system comprises at least one image acquisition apparatus and a processing apparatus, the image acquisition apparatus is configured to acquire an image of an electrode plate to obtain a to-be-inspected image; and the processing apparatus is configured to: determine at least one edge capture region in the to-be-inspected image based on preset edge capture region information, wherein the preset edge capture region information comprises position information and/or size information of the edge capture region; perform boundary detection on each edge capture region to obtain a first boundary line in each edge capture region, wherein the first boundary line is used for dividing different sub-regions of the electrode plate arranged in a width direction; and determine, by using the first boundary line in each edge capture region, width information related to the electrode plate.

24. The system according to claim 23, wherein
the visual inspection system further comprises a first image acquisition apparatus and a second image acquisition apparatus, the first image acquisition apparatus and the second image acquisition apparatus are disposed behind the second coating mechanism, the first image acquisition apparatus is disposed on one side of the first coating surface, and the second image acquisition apparatus is disposed on one side of the second coating surface.

25. The system according to claim 23,
further comprising a deviation correcting mechanism, wherein the deviation correcting mechanism is configured to perform deviation correction on the coating mechanism of the coating surface of the electrode plate.
